# EUROPÄISCHE PATENTSCHRIFT

(11) **EP 3 602 120 B1**
(45) Veröffentlichungstag und Bekanntmachung des Hinweises auf die Patenterteilung: **08.12.2021**
(21) Anmeldenummer: 17780099.2
(22) Anmeldetag: 05.10.2017
(51) Int. Cl.: G01S 17/02, G01S 17/08, G01S 7/481

(54) **LASERENTFERNUNGSMESSGERÄT**
LASER DISTANCE MEASURING DEVICE
TÉLÉMÈTRE LASER

(30) Priorität: 28.03.2017 DE 102017205195
(43) Veröffentlichungstag der Anmeldung: 05.02.2020
(73) Patentinhaber: Robert Bosch GmbH, 70442 Stuttgart (DE)
(72) Erfinder: THIEMT, Stephan, 71364 Winnenden (DE); HESSE, Hendrik, 70771 Leinfelden-Echterdingen (DE); AKBIYIK, Volkan, 73765 Neuhausen (DE); LASSMANN, Markus, 68161 Mannheim (DE); POPIOLEK, Lena, 27751 Delmenhorst (DE); STIERLE, Joerg, 71111 Waldenbuch (DE); MARCUS, Corinna, 70771 Leinfelden-Echterdingen (DE); GÄRTNER, Felix, 73529 Schwäbisch Gmünd (DE)
(86) Internationale Anmeldenummer: PCT/EP2017/075358
(87) Internationale Veröffentlichungsnummer: WO 2018/177570

(56) Entgegenhaltungen:
- EP-A2- 2 169 347
- WO-A1-2012/089420
- DE-A1-102009 027 668
- DE-U1- 29 615 514
- GB-A- 2 167 262
- US-A1- 2014 104 591
- US-A1- 2016 069 678

## Beschreibung

Die Erfindung betrifft ein handgehaltenes Laserentfernungsmessgerät zur berührungslosen Entfernungsmessung, eine Aufsatzvorrichtung zur reversiblen Anordnung an dem Laserentfernungsmessgerät sowie ein System bestehend aus zumindest einem handgehaltenen Laserentfernungsmessgerät und zumindest einer Aufsatzvorrichtung.

### Stand der Technik

Es sind bereits handgehaltene Laserentfernungsmessgeräte bekannt, beispielsweise aus DE 10 2004 023 998 A1. Ferner sind aus EP 2169347 A2, US 2014/104591 A1 und DE 10 2009 027 668 A1 bereits Aufsatzvorrichtungen bekannt, mittels der dem Laserentfernungsmessgerät eine Zusatzfunktionalität bereitgestellt wird. Auch sind geräteseitige Schnittstellen aus DE 29615514 U1 oder US 2016/0069678 A1 bekannt, mittels der ein Laserentfernungsmessgerät geladen oder an ein weiteres externes Gerät angeschlossen werden kann.

### Offenbarung der Erfindung

Die Erfindung geht aus von einem handgehaltenen Laserentfernungsmessgerät zur berührungslosen Entfernungsmessung zwischen dem Laserentfernungsmessgerät und einem entfernten Gegenstand unter Verwendung eines von dem Laserentfernungsmessgerät emittierbaren Laserstrahls, mit einem Gerätegehäuse und einer Energieversorgungsvorrichtung.

Erfindungsgemäß weist das Laserentfernungsmessgerät dem Gerätegehäuse zugeordnet eine geräteseitige Koppelvorrichtung auf, die zur reversiblen Anordnung zumindest einer Aufsatzvorrichtung an dem Laserentfernungsmessgerät eingerichtet ist, wobei durch die Anordnung der Aufsatzvorrichtung an dem Laserentfernungsmessgerät zumindest eine Zusatzfunktionalität bereitstellbar ist.

"Handgehalten" bedeutet, dass das Laserentfernungsmessgerät bei einem Messvorgang von einem Bediener mit der Hand zumindest geführt, vorzugsweise getragen, besonders bevorzugt gehalten werden kann. Dazu beträgt die Gesamtmasse des Laserentfernungsmessgeräts insbesondere weniger als 1 kg, bevorzugt weniger als 500 g, besonders bevorzugt weniger als 300 g. Ferner können in einer Ausführungsform des Laserentfernungsmessgeräts alle Komponenten des Laserentfernungsmessgeräts in einem die Komponenten im Wesentlichen umschließenden Gerätegehäuse untergebracht werden. Insbesondere beträgt die Länge der längsten Seite dieses Gerätegehäuses weniger als 30 cm, vorteilhaft weniger als 20 cm, besonders vorteilhaft weniger als 15 cm. In einem Anwendungsbeispiel kann das handgehaltene Laserentfernungsmessgerät beispielsweise zur Vermessung von Gegenständen oder Innenräumen bei handwerklichen Tätigkeiten verwendet werden.

Zur Entfernungsmessung weist das handgehaltene Laserentfernungsmessgerät eine Sendevorrichtung zum Aussenden von Laserstrahlung bzw. eines Laserstrahls, eine Empfangsoptik zum Empfangen von von einem entfernten Objekt rücklaufender Laserstrahlung sowie zumindest eine Detektorvorrichtung zum Detektieren von empfangener Laserstrahlung sowie eine Steuervorrichtung auf.

Die Sendevorrichtung des Laserentfernungsmessgeräts zum Aussenden von Laserstrahlung weist zumindest eine Lichtquelle auf, vorzugsweise in Form eines Lasers, eines Halbleiterlasers oder einer Laserdiode, die insbesondere zeitlich moduliertes Licht, bevorzugt Laserstrahlung, in Richtung eines entfernten Objekts aussendet. In einer Ausführungsform kann die Laserstrahlung in einem für das menschliche Auge sichtbaren spektralen Wellenlängenbereich, d.h. insbesondere zwischen 380 nm bis 780 nm, liegen. Vorteilhaft kann ein Bediener des Laserentfernungsmessgeräts die von dem Laserentfernungsmessgerät emittierte Laserstrahlung ohne Zuhilfenahme optischer Hilfsmittel erkennen und insbesondere deren Projektion auf das entfernte Objekt als projizierte Lasermarkierung wahrnehmen.

Ein von dem mittels ausgesendetem Laserstrahl beleuchteten Zielobjekt reflektierter und/oder gestreuter, d.h. rücklaufender Laserstrahl wird unter Verwendung einer Empfangsoptik auf die Detektorvorrichtung, insbesondere deren Detektorelement, projiziert, bevorzugt abgebildet. Beispielsweise kann die Empfangsoptik strahlformende und/oder strahllenkende und/oder die Eigenschaften der Laserstrahlung beeinflussende optische Elemente, beispielsweise Linsen, Filter, diffraktive Elemente, Spiegel, Reflektoren, optisch transparente Scheiben oder dergleichen, aufweisen. Der rücklaufende Laserstrahl wird mittels der Detektorvorrichtung zumindest teilweise detektiert und zur Ermittlung der zu messenden Entfernung verwendet. Dabei soll unter der Detektorvorrichtung zumindest ein strahlungsempflindliches Detektorelement wie beispielsweise eine Photodioden, eine PIN-Diode, eine Avalanche Photo Diode (APD), eine Single-Photon-Avalanche-Diode (SPAD) oder dergleichen, verstanden werden, das abhängig von einer auftreffenden Lichtintensität ein Detektionssignal liefert.

Die Steuervorrichtung dient der Steuerung des Laserentfernungsmessgeräts und weist einen Informationseingang, eine Informationsverarbeitung sowie eine Informationsausgabe auf. In einer Ausführungsform kann die Steuervorrichtung einen Prozessor sowie in einem Speicher der Steuervorrichtung gespeicherte Betriebsprogramme und/oder Regelroutinen und/oder Auswerteroutinen und/oder Berechnungsroutinen aufweisen. Die Steuervorrichtung ist dazu vorgesehen, aus einer Entfernungsmessung mittels der Laserentfernungsmesseinheit eine Entfernung zu ermitteln. Insbesondere kann die Steuervorrichtung dazu vorgesehen sein, aus einem zwischen der ausgesendeten Laserstrahlung und der von der Oberfläche des Zielobjekts rücklaufenden Laserstrahlung durchgeführten Phasenvergleich eine Lichtlaufzeit zu ermitteln und über die Lichtgeschwindigkeit den gesuchten Abstand zwischen dem Laserentfernungsmessgerät und dem Zielobjekt zu berechnen bzw. zu ermitteln. Die Steuervorrichtung ist mit den anderen Komponenten des Laserentfernungsmessgeräts, insbesondere der Sendevorrichtung, der Detektorvorrichtung, einer Ausgabevorrichtung, ferner beispielsweise einer Eingabevorrichtung, einer Energieversorgungsvorrichtung sowie einer Datenkommunikationsschnittstelle, signaltechnisch verbunden. Die Steuervorrichtung ist dazu vorgesehen, während des Betriebs des Laserentfernungsmessgeräts mit diesen Komponenten zu kommunizieren und somit einen Betrieb des Laserentfernungsmessgeräts zu ermöglichen.

Ein ermittelter Entfernungsmesswert in Richtung des emittierten Laserstrahls und/oder ein Ergebnis einer Berechnung kann von der Steuervorrichtung des Laserentfernungsmessgeräts weiterverarbeitet und/oder mittels einer Ausgabevorrichtung des Laserentfernungsmessgeräts, beispielsweise unter Verwendung eines Bildschirms, insbesondere eines berührungssensitiven Bildschirms, oder einer akustischen Ausgabevorrichtung, an einen Bediener des Laserentfernungsmessgeräts ausgegeben werden.

In einer Ausführungsform des handgehaltenes Laserentfernungsmessgeräts ist die Steuervorrichtung ferner zu einem Empfang und/oder einer Auswertung zumindest einer von einer am Laserentfernungsmessgerät angeordneten Aufsatzvorrichtung bereitgestellten Information vorgesehen. Eine derartige Information kann insbesondere einen Typ der angeordneten Aufsatzvorrichtung, einen angeordneten Zustand, einen mittels der angeordneten Aufsatzvorrichtung ermittelten Dateninformation, insbesondere ein Messwert, oder dergleichen sein.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Das Laserentfernungsmessgerät weist eine Energieversorgungsvorrichtung, beispielsweise eine Batterie oder einen Akkumulator, zu dessen Versorgung mit Energie auf. Ferner kann das Laserentfernungsmessgerät Bedienelemente zu dessen Bedienung aufweisen.

Ferner wird eine Aufsatzvorrichtung zur Anordnung an einem handgehaltenen Laserentfernungsmessgerät, insbesondere einem zuvor beschriebenen handgehaltenen Laserentfernungsmessgerät, mit einem Aufsatzgehäuse vorgeschlagen. Unter dem Aufsatzgehäuse ist insbesondere ein Gehäuse zu verstehen, welches alle oder zumindest alle wesentlichen Komponenten der Aufsatzvorrichtung, beispielsweise elektronische oder optische Komponenten, umschließt und/oder welches einen wesentlichen Bestandteil der Aufsatzvorrichtung bildet. Die Aufsatzvorrichtung weist erfindungsgemäß dem Aufsatzgehäuse zugeordnet eine aufsatzseitige Koppelvorrichtung auf, die zur reversiblen Anordnung der Aufsatzvorrichtung zumindest an dem Laserentfernungsmessgerät eingerichtet ist, wobei durch die Anordnung der Aufsatzvorrichtung an dem Laserentfernungsmessgerät zumindest eine Zusatzfunktionalität bereitstellbar ist.

Die geräteseitige Koppelvorrichtung des Laserentfernungsmessgeräts und die aufsatzseitige Koppelvorrichtung der Aufsatzvorrichtung sind derart, insbesondere korrespondierend oder komplementär, ausgestaltet, dass sie zur reversiblen, insbesondere funktionalen und/oder mechanischen, Anordnung der Aufsatzvorrichtung an dem Laserentfernungsmessgerät vorteilhaft zusammenwirken. Die Koppelvorrichtungen bewirken dabei eine lösbare, insbesondere werkzeuglos lösbare, d.h. reversible, elektrische und/oder mechanische und/oder signaltechnische Anbindung der Aufsatzvorrichtung an das Laserentfernungsmessgerät. Unter "lösbar verbinden oder reversibel anordnen" ist dabei insbesondere zu verstehen, dass eine Anordnung einer jeweiligen Aufsatzvorrichtung derart erfolgt, dass die Aufsatzvorrichtung ohne Zerstörung des Laserentfernungsmessgeräts und/oder ohne Zerstörung der geräteseitigen Koppelvorrichtung und der aufsatzseitigen Koppelvorrichtung wieder von dem Gerätegehäuse, insbesondere von dem Laserentfernungsmessgerät, getrennt und somit entfernt werden kann. Beispielsweise kann eine derartige reversibel lösbare Anordnung durch Anstecken, Einstecken, Aufstecken, Andocken, Anheften, Ankletten oder ein anderweitiges, einem Fachmann geläufiges Anordnen erfolgen.

In einer Ausführungsform des handgehaltenen Laserentfernungsmessgeräts weist die geräteseitige Koppelvorrichtung eine geräteseitige Koppelschnittstelle zu einer mechanischen Anbindung der Aufsatzvorrichtung an dem Gerätegehäuse des Laserentfernungsmessgeräts und/oder eine geräteseitige Energieschnittstelle zu einer energetischen Anbindung der Aufsatzvorrichtung an das Laserentfernungsmessgerät, insbesondere an eine Steuervorrichtung und/oder an eine Energieversorgungsvorrichtung des Laserentfernungsmessgeräts, und/oder eine geräteseitige Datenkommunikationsschnittstelle zu einer informationsübertragenden Anbindung der Aufsatzvorrichtung an das Laserentfernungsmessgerät, insbesondere an eine Steuervorrichtung und/oder an eine Ausgabevorrichtung des Laserentfernungsmessgeräts, auf.

Entsprechend weist in einer Ausführungsform der Aufsatzvorrichtung die aufsatzseitige Koppelvorrichtung eine aufsatzseitige Koppelschnittstelle zu einer mechanischen Anbindung der Aufsatzvorrichtung an einem Gerätegehäuse des Laserentfernungsmessgeräts und/oder eine aufsatzseitige Energieschnittstelle zu einer energetischen Anbindung der Aufsatzvorrichtung an das Laserentfernungsmessgerät, insbesondere an eine Steuervorrichtung und/oder an eine Energieversorgungsvorrichtung des Laserentfernungsmessgeräts, und/oder eine aufsatzseitige Datenkommunikationsschnittstelle zu einer informationsübertragenden Anbindung der Aufsatzvorrichtung an das Laserentfernungsmessgerät, insbesondere an eine Steuervorrichtung und/oder an eine Ausgabevorrichtung des Laserentfernungsmessgeräts, auf.

Es sei an dieser Stelle darauf hingewiesen, dass im Folgenden mit "Koppelschnittstelle(n)", "Energieschnittstelle(n)" und "Datenkommunikationsschnittstelle(n)" jeweils die geräteseitige und/oder die aufsatzseitige Hälfte der entsprechenden Schnittstelle oder die gesamte Schnittstelle gemeint ist.

Unter einer (geräteseitigen/aufsatzseitigen) "Koppelschnittstelle zu einer mechanischen Anbindung" ist insbesondere eine (geräteseitige/aufsatzseitige) mechanische Schnittstelle zu verstehen, die dazu ausgebildet ist, eine mechanische Anbindung der Aufsatzvorrichtung an dem Gerätegehäuse des Laserentfernungsmessgeräts (oder im Rahmen dieser Schrift synonym: "an dem Laserentfernungsmessgerät") zu bewirken. Insbesondere bewirkt die mechanische Schnittstelle eine Fixierung der Aufsatzvorrichtung an dem Gerätegehäuse des Laserentfernungsmessgeräts.

In einer Ausführungsform kann eine Aufsatzvorrichtung unter Verwendung zumindest eines Magnets an dem Gerätegehäuse des Laserentfernungsmessgeräts anordenbar sein. Unter Verwendung des zumindest einen Magnets zur Anordnung der Aufsatzvorrichtung an dem Gerätegehäuse kann eine besonders einfache Anordnung bzw. Abnahme der Aufsatzvorrichtung durch einen Bediener des Laserentfernungsmessgeräts erfolgen.

In einer Ausführungsform des handgehaltenen Laserentfernungsmessgeräts weist die geräteseitige Koppelschnittstelle zumindest ein Koppelelement auf, das dazu eingerichtet ist, eine kraftschlüssige und/oder eine formschlüssige Kopplung mit einer aufsatzseitigen Koppelschnittstelle der Aufsatzvorrichtung zu realisieren. Alternativ oder zusätzlich weist in einer Ausführungsform der Aufsatzvorrichtung die aufsatzseitige Koppelschnittstelle zumindest ein Koppelelement auf, das dazu eingerichtet ist, eine kraftschlüssige und/oder eine formschlüssige Kopplung mit der geräteseitigen Koppelschnittstelle des Laserentfernungsmessgeräts zu realisieren.

Mittels des zumindest einen Koppelelements (unabhängig davon, ob es sich um ein Koppelelement der geräteseitigen Koppelschnittstelle oder der aufsatzseitigen Koppelschnittstelle handelt) kann das Aufsatzgehäuse der Aufsatzvorrichtung lösbar, insbesondere werkzeuglos lösbar, mechanisch mit dem Gerätegehäuse des Laserentfernungsmessgeräts verbunden werden.

In einer Ausführungsform des handgehaltenen Laserentfernungsmessgerät weist die geräteseitige Koppelschnittstelle zumindest ein Koppelelement auf, das dazu eingerichtet ist, eine axiale Sicherung und/oder eine radiale Sicherung und/oder eine Drehsicherung der Kopplung mit einer aufsatzseitigen Koppelschnittstelle der Aufsatzvorrichtung zu realisieren. Alternativ oder zusätzlich weist in einer Ausführungsform der Aufsatzvorrichtung die aufsatzseitige Koppelschnittstelle zumindest ein Koppelelement auf, das dazu eingerichtet ist, eine axiale Sicherung und/oder eine radiale Sicherung und/oder eine Drehsicherung der Kopplung mit einer geräteseitigen Koppelschnittstelle des Laserentfernungsmessgeräts zu realisieren.

Die Richtungsangaben wie "axial" und "radial" sowie die Relativangabe "Drehung" beziehen sich dabei insbesondere auf eine Bezugsgröße des Gerätegehäuses des Laserentfernungsmessgeräts, beispielsweise auf eine Symmetrieachse oder eine Kante des Gerätegehäuses. Alternativ kann auch die Emissionsrichtung des emittierbaren Laserstrahls als Bezugsgröße dienen. Unter "axial" kann dabei insbesondere "in Emissionsrichtung" verstanden werden. Unter "radial" kann entsprechend "senkrecht zur Emissionsrichtung entlang einer Geraden, welche die Emissionsrichtung schneidet, nach außen" verstanden werden. Unter "Drehung" kann insbesondere eine Richtung verstanden werden, die durch eine Drehung um die Emissionsrichtung entlang eines Kreises in einer Ebene senkrecht zur Emissionsrichtung definiert ist. Folglich erlaubt eine "Axialsicherung", eine Aufsatzvorrichtung in axialer Richtung ortsfest zu sichern. "Radialsicherung" erlaubt hingegen, eine Aufsatzvorrichtung in radialer Richtung ortsfest zu sichern. Schließlich erlaubt "Drehsicherung", eine Aufsatzvorrichtung gegen eine Rotation, hier um die Emissionsrichtung, ortsfest zu sichern.

Somit bewirkt das zumindest eine Koppelelement (unabhängig davon, ob es sich um ein Koppelelement der geräteseitigen Koppelschnittstelle oder der aufsatzseitigen Koppelschnittstelle handelt) insbesondere eine Axialsicherung und/oder eine Radialsicherung und/oder eine Drehsicherung des Aufsatzgehäuses der Aufsatzvorrichtung an dem Gerätegehäuse des Laserentfernungsmessgeräts. Insbesondere kann das zumindest eine Koppelelement gleichzeitig zur Axialsicherung, zur Radialsicherung und zur Drehsicherung dienen.

Alternativ oder zusätzlich kann eine Axialsicherung und/oder eine Radialsicherung und/oder eine Drehsicherung des Aufsatzgehäuses der Aufsatzvorrichtung an dem Gerätegehäuse des Laserentfernungsmessgeräts auch durch ein zusätzliches Sicherungselement der geräteseitigen und/oder der aufsatzseitigen Koppelschnittstelle bewirkt werden. Beispielsweise können in einem Ausführungsbeispiel jeweils ein Sicherungselement für eine Axialsicherung und ein Sicherungselement für eine Drehsicherung vorgesehen sein, wobei das Sicherungselement für die Axialsicherung und das Sicherungselement für die Drehsicherung verschieden voneinander ausgebildet sind. Das zumindest eine Sicherungselement kann dabei insbesondere als ein kraft- und/oder formschlüssiges Sicherungselement ausgebildet sein.

In einer Ausführungsform des handgehaltenen Laserentfernungsmessgeräts ist die geräteseitige Koppelschnittstelle dazu eingerichtet, bei Anordnung der Aufsatzvorrichtung mit einer aufsatzseitigen Koppelschnittstelle einen Hinterschnitt zu bilden. Entsprechend ist auch die aufsatzseitige Koppelschnittstelle dazu eingerichtet, bei Anordnung der Aufsatzvorrichtung mit der geräteseitigen Koppelschnittstelle einen, insbesondere denselben, Hinterschnitt zu bilden.

In einer Ausführungsform des handgehaltenen Laserentfernungsmessgeräts ist die geräteseitige Koppelschnittstelle als Formschlusselement einer Bajonett-Verbindung, insbesondere als Ausnehmung einer Bajonett-Verbindung, realisiert. Entsprechend ist die aufsatzseitige Koppelschnittstelle in einer entsprechenden Ausführungsform der Aufsatzvorrichtung als, bevorzugt zum Formschlusselement der geräteseitigen Koppelschnittstelle komplementäres, Formschlusselement einer Bajonett-Verbindung, insbesondere als Bolzen oder Zapfen einer Bajonettverbindung, realisiert.

Auf diese Weise kann die Aufsatzvorrichtung besonders einfach und zuverlässig über eine Bajonettverbindung an dem Laserentfernungsmessgerät befestigt und verriegelt werden. In einer Ausführungsform kann die Bajonett-Verbindung durch ein Sperrelement verriegelt werden. In einem Ausführungsbeispiel kann die geräteseitige Koppelschnittstelle einen Flanschring aufweisen, wobei der Flanschring drehstarr mit dem Gerätegehäuse (oder alternativ mit dem Aufsatzgehäuse) verbunden ist, während die korrespondierende (komplementäre) aufsatzseitige Koppelschnittstelle (oder entsprechend die geräteseitige Koppelschnittstelle) einen Befestigungsring aufweist, der derart beim Anordnen der Aufsatzvorrichtung durch eine rotatorische und axiale Relativbewegung des Befestigungsringes gegenüber dem Flanschring in Eingriff gebracht wird, dass der Befestigungsring und der Flanschring gemeinsam einen Hinterschnitt bilden.

In einer Ausführungsform des handgehaltenen Laserentfernungsmessgeräts ist die geräteseitige Koppelschnittstelle als Form- und Kraftschlusselement einer Rastverbindung, insbesondere als Ausnehmung einer Rastverbindung, realisiert. Entsprechend ist die aufsatzseitige Koppelschnittstelle in einer entsprechenden Ausführungsform der Aufsatzvorrichtung als, bevorzugt korrespondierendes bzw. komplementäres, Form- und Kraftschlusselement einer Rastverbindung, insbesondere als Rastnase oder Rasthaken der Rastverbindung, realisiert.

In einer Ausführungsform kann die Rastverbindung als eine elastische Rastverbindung mit zumindest einem elastischen Form- und Kraftschlusselement realisiert sein. Eine derartige Rastverbindung hat den Vorteil, dass sie einfach handhabbar ist, da kein zusätzliches Werkzeug als Hilfsmittel zum Anordnen oder Lösen der Aufsatzvorrichtung benötigt wird. Die einfache Handhabung der Rastverbindung zeigt sich insbesondere in einer Ausführungsform, in der das Form- und Kraftschlusselement selbsttätig, d.h. ohne weitere manuelle Betätigung, rastend ausgeführt ist. Dies bedeutet, dass bereits beim Ansetzen der Aufsatzvorrichtung an dem Gerätegehäuse des Laserentfernungsmessgeräts das Form- und Kraftschlusselement der aufsatzseitigen Koppelschnittstelle in korrespondierende bzw. komplementäre ausgeformte Mittel der geräteseitigen Koppelschnittstelle an dem Gerätegehäuse rastend eingreift. Die Rastverbindung zwischen Aufsatzvorrichtung und Gerätegehäuse des Laserentfernungsmessgeräts wird dabei automatisch, d.h. ohne sonstigen Handgriff oder Einwirkung eines sonstigen Hilfsmittels, wirksam ("Autolock-Funktion"). Dies kann beispielsweise durch eine federnde Rastverbindung derart erfolgen, dass ein federndes (oder federnd gelagertes) Rastmittel, beispielsweise eine Rastnase oder ein Rasthaken, beim Zusammenfügen der Aufsatzvorrichtung und des Laserentfernungsmessgeräts zwangsgeführt entgegen der Kraft des federnden Form- und Kraftschlusselements mit einem korrespondierenden Mittel am Gerätegehäuse, z.B. einer Ausnehmung, in Eingriff gebracht wird. Das federnde Form- und Kraftschlusselement kann beispielsweise ein federnder Rasthaken mit einer Auflaufschräge sein, wobei die Auflaufschräge des Rasthakens mit einer korrespondierenden Auflaufschräge am Gerätegehäuse des Laserentfernungsmessgeräts derart zusammenwirkt, dass bereits beim Ansetzen der Aufsatzvorrichtung an dem Gerätegehäuse ohne weiteres Zutun die federnde Rastnase oder der federnde Rasthaken gespannt wird und in die Ausnehmung einschnappt bzw. einrastet.

Ein weiterer Vorteil einer Rastverbindung liegt darin, dass das Einrasten des Formund Kraftschlusselement in korrespondierende Mittel am Gerätegehäuse hörbar erfolgen kann, so dass dem Bediener des Laserentfernungsmessgeräts durch ein Klick-Geräusch beim Einrasten angezeigt wird, dass die Aufsatzvorrichtung vollständig und ordnungsgemäß mit dem Laserentfernungsmessgerät verbunden und verriegelt ist.

Es sei an dieser Stelle darauf hingewiesen, dass die Beschreibungen einer Ausführungsform, bei der die geräteseitige Koppelschnittstelle als Ausnehmung und die aufsatzseitige Koppelschnittstelle als Rasthaken realisiert ist, selbstverständlich auch auf eine spiegelsymmetrisch ausgeführte Ausführungsform übertragbar ist, bei der die geräteseitige Koppelschnittstelle als Rasthaken und die aufsatzseitige Koppelschnittstelle als Ausnehmung realisiert ist.

Zum Lösen der Rastverbindung, und damit zum Abnehmen der Aufsatzvorrichtung von dem Laserentfernungsmessgerät, ist das zumindest eine Form- und Kraftschlusselement, insbesondere die Rastnase oder der Rasthaken, von Hand betätigbar. Das Form- und Kraftschlusselement kann dabei an der Koppelschnittstelle so angebracht sein, dass es direkt von außen oder indirekt über ein Entriegelungselement, z.B. eine Entriegelungstaste in Form einer Drucktaste, einen Schieber oder dergleichen, durch den Bediener des Laserentfernungsmessgeräts manuell betätigbar ist. Im Falle einer federnden Rastverbindung muss der Bediener der Handwerkzeugmaschine entgegen der Federkraft des federnden Form- und Kraftschlusselements Kraft aufbringen, um das Form- und Kraftschlusselement mit dem korrespondierenden Mittel an dem Gerätegehäuse (oder umgekehrt) des Laserentfernungsmessgeräts außer Eingriff zu bringen.

Als Mittel für eine Rastverbindung können grundsätzlich unterschiedliche Ausführungsformen zur Realisierung kommen. Das Rastmittel kann beispielsweise in sich federnd ausgeführt sein. Es kann jedoch auch federbelastet (federnd gelagert) ausgeführt sein, beispielsweise in Form eines federbelasteten Riegels, Hakens oder desgleichen.

In einer Ausführungsform des handgehaltenen Laserentfernungsmessgeräts weist die geräteseitige Koppelschnittstelle einen Verdrehschutz auf, der eine Anordnung der Aufsatzvorrichtung in einer vorbestimmten Ausrichtung bewirkt. Alternativ oder zusätzlich weist in einer Ausführungsform der Aufsatzvorrichtung die aufsatzseitige Koppelschnittstelle einen Verdrehschutz auf, der eine Anordnung der Aufsatzvorrichtung in einer vorbestimmten Ausrichtung bewirkt.

In einer Ausführungsform des handgehaltenen Laserentfernungsmessgeräts weist die geräteseitige Koppelschnittstelle eine Führung, insbesondere eine konisch geformte Führung, auf, die eine spielfreie Anordnung der Aufsatzvorrichtung in einer, insbesondere bezogen auf den Laserstrahl des Laserentfernungsmessgeräts, vorbestimmten Ausrichtung bewirkt. Alternativ oder zusätzlich weist in einer Ausführungsform der Aufsatzvorrichtung die aufsatzseitige Koppelschnittstelle eine Führung, insbesondere eine konisch oder schräg geformte Führung, auf, die eine spielfreie Anordnung der Aufsatzvorrichtung in einer, insbesondere bezogen auf den Laserstrahl des Laserentfernungsmessgeräts, vorbestimmten Ausrichtung bewirkt.

Unter einem "Verdrehschutz" ist insbesondere eine Vorrichtung oder ein Mittel einer Koppelschnittstelle zu verstehen, die die Anordnung der Aufsatzvorrichtung an dem Laserentfernungsmessgerät lediglich in einer Vorzugsausrichtung erlaubt. Beispielsweise kann ein Verdrehschutz durch eine bestimmte Formgebung der Koppelschnittstelle bewirkt werden, insbesondere beispielsweise durch eine spezielle Form und/oder eine spezielle exzentrische Anordnung. Auf diese Weise können Verdrehstellungen der Aufsatzvorrichtung bezogen auf das Laserentfernungsmessgerät ausgeschlossen werden. Vorteilhaft lässt sich die Aufsatzvorrichtung nur in einer einzigen Position oder Ausrichtung an das Laserentfernungsmessgerät anordnen. Somit kann eine besonders sichere Anordnung der Aufsatzvorrichtung an dem Laserentfernungsmessgerät realisiert werden. Eine missbräuchliche oder unsachgemäße Handhabung, insbesondere eine unsachgemäße Anordnung der Aufsatzvorrichtung an dem Laserentfernungsmessgerät, kann derart vermieden werden.

Ferner kann eine Führung, insbesondere eine konisch oder schräg geformte Führung, eine präzisere Anordnung der Aufsatzvorrichtung in einer, insbesondere bezogen auf den Laserstrahl des Laserentfernungsmessgeräts, vorbestimmten Ausrichtung bewirken. Mittels der Führung wird die Aufsatzvorrichtung vorteilhaft in eine präzise definierte Anordnungsposition und/oder Anordnungsausrichtung geführt, sodass eine vorteilhaft exakt ausgerichtete Anordnung der Aufsatzvorrichtung an dem Laserentfernungsmessgerät ermöglicht wird. Dies ist insbesondere von Relevanz für Aufsatzvorrichtungen, bei denen eine präzise Ausrichtung von optischen Elementen bezogen auf den emittierbaren Laserstrahl erforderlich ist.

Für den Verdrehschutz und für die Führung können in einer Ausführungsform unterschiedliche Mittel vorgesehen sein. Alternativ kann ein einziges Mittel, beispielsweise ein Rastmittel, so ausgebildet sein, dass es gleichzeitig einen Verdrehschutz als auch eine Führung realisiert.

In einer Ausführungsform des handgehaltenen Laserentfernungsmessgeräts weist die geräteseitige Koppelvorrichtung eine geräteseitige Energieschnittstelle zu einer energetischen Anbindung der Aufsatzvorrichtung an das Laserentfernungsmessgerät, insbesondere an eine Steuervorrichtung und/oder an eine Energieversorgungsvorrichtung des Laserentfernungsmessgeräts, auf. Entsprechend weist in einer Ausführungsform der Aufsatzvorrichtung auch die aufsatzseitige Koppelvorrichtung eine aufsatzseitige Energieschnittstelle zu einer energetischen Anbindung der Aufsatzvorrichtung an das Laserentfernungsmessgerät, insbesondere an eine Steuervorrichtung und/oder an eine Energieversorgungsvorrichtung des Laserentfernungsmessgeräts, auf.

Unter einer (geräteseitigen/aufsatzseitigen) "Energieschnittstelle zu einer energetischen Anbindung" ist insbesondere eine (geräteseitige/aufsatzseitige) elektrische Schnittstelle zu verstehen, die dazu ausgebildet ist, eine elektrische Anbindung der Aufsatzvorrichtung an das Laserentfernungsmessgeräts, insbesondere an eine Energieversorgungsvorrichtung und/oder an eine Steuervorrichtung des Laserentfernungsmessgeräts, zu bewirken. Die Energieschnittstelle ist insbesondere dazu ausgelegt, zumindest eine Leistung und/oder einen Strom zu übertragen. In einer Ausführungsform ist die Energieschnittstelle zu einer mit der mechanischen Anbindung gekoppelten energetischen Anbindung der Aufsatzvorrichtung an dem Gerätegehäuse des Laserentfernungsmessgeräts eingerichtet. Unter einer mit der mechanischen Anbindung "gekoppelten Anbindung" soll in diesem Zusammenhang insbesondere eine sich zumindest im Wesentlichen gleichzeitig mit der mechanischen Anbindung schließende energetische Anbindung verstanden werden. Vorzugsweise sind die mechanische Anbindung und die energetische Anbindung dazu vorgesehen, in einer gleichen Schließbewegung geschlossen zu werden. Vorzugsweise sind die geräteseitige Koppelvorrichtung und die aufsatzseitige Koppelvorrichtung dazu vorgesehen, die mechanische Anbindung und die energetische Anbindung der Aufsatzvorrichtung an dem Laserentfernungsmessgerät zu bewirken.

In einer Ausführungsform weist die energetische Schnittstelle der geräteseitigen Koppelvorrichtung und/oder der aufsatzseitigen Koppelvorrichtung für die Übertragung einer Leistung und/oder eines Stroms zumindest ein Kontaktelement, bevorzugt zumindest zwei Kontaktelemente, insbesondere zwei Steckelemente, zur elektrischen Kontaktierung der Aufsatzvorrichtung mit dem Laserentfernungsmessgerät auf. Entsprechende Kontaktelemente können dabei in Form einer Kontaktfläche realisiert sein. Die geräteseitigen Kontaktelemente sind dabei mit der Energieversorgungsvorrichtung und/oder mit der Steuervorrichtung des Laserentfernungsmessgeräts verbunden.

In einer Ausführungsform kann die Energieübertragung von der Energieversorgung des Laserentfernungsmessgeräts zur Aufsatzvorrichtung auch über eine induktiv ausgestaltete Energieschnittstelle erfolgen. Vorteilhaft kann derart auf freiliegende elektrische Kontakte verzichtet werden.

Auf diese Weise ist die geräteseitige Koppelvorrichtung zur Übertragung einer elektrischen Energie an eine elektrische Energienutzungseinheit einer an dem Laserentfernungsmessgerät angeordneten Aufsatzvorrichtung eingerichtet.

Insbesondere kann auf diese Weise eine Energieversorgungsvorrichtung des Laserentfernungsmessgeräts gleichzeitig der Energieversorgung einer an dem Laserentfernungsmessgerät angeordneten Aufsatzvorrichtung dienen. Beispielsweise kann Energie, insbesondere während des Betriebs des Laserentfernungsmessgeräts, an die Aufsatzvorrichtung abgegeben werden. Somit kann vorteilhaft eine separate Energieversorgung, insbesondere eine separate Batterie oder dergleichen, der Aufsatzvorrichtung unter Verwendung der Energieversorgungvorrichtung des Laserentfernungsmessgeräts eingespart werden.

In einer Ausführungsform des handgehaltenen Laserentfernungsmessgeräts weist die geräteseitige Koppelvorrichtung eine geräteseitige Datenkommunikationsschnittstelle zu einer informationsübertragenden Anbindung der Aufsatzvorrichtung an das Laserentfernungsmessgerät, insbesondere an eine Steuervorrichtung und/oder an eine Ausgabevorrichtung des Laserentfernungsmessgeräts, auf. Entsprechend weist in einer Ausführungsform der Aufsatzvorrichtung auch die aufsatzseitige Koppelvorrichtung eine aufsatzseitige Datenkommunikationsschnittstelle zu einer informationsübertragenden Anbindung der Aufsatzvorrichtung an das Laserentfernungsmessgerät, insbesondere an eine Steuervorrichtung und/oder an eine Ausgabevorrichtung des Laserentfernungsmessgeräts, auf.

Unter einer (geräteseitigen/aufsatzseitigen) "Datenkommunikationsschnittstelle zu einer informationsübertragenden Anbindung" ist insbesondere eine (geräteseitige/aufsatzseitige) Schnittstelle zu verstehen, die dazu ausgebildet ist, eine signaltechnische Anbindung der Aufsatzvorrichtung an das Laserentfernungsmessgeräts, insbesondere an eine Steuervorrichtung und/oder an eine Ausgabevorrichtung des Laserentfernungsmessgeräts, zu bewirken. Die Datenkommunikationsschnittstelle ermöglicht eine leitungsgebundene und/oder eine drahtlose Kommunikation, mittels der die Aufsatzvorrichtung beispielsweise Messergebnisse und/oder Arbeitsparameter an das Laserentfernungsmessgerät senden und/oder von diesem empfangen kann. In einer Ausführungsform kann die Datenkommunikationsschnittstelle ein standardisiertes Kommunikationsprotokoll zu einer Übertragung von elektronischen, insbesondere digitalen Daten, verwenden. Vorteilhaft umfasst die Datenkommunikationsschnittstelle eine drahtlose Schnittstelle, insbesondere beispielsweise eine WLAN-, Bluetooth-, Infrarot-, NFC-, RFID-, GSM-Schnittstelle oder eine andere, einem Fachmann als sinnvoll erscheinende drahtlose Schnittstelle. Alternativ kann die Datenkommunikationsschnittstelle auch einen kabelgebunden Adapter aufweisen, beispielsweise einen USB- oder Mikro-USB-Adapter oder einen anderen, einem Fachmann als sinnvoll erscheinenden Adapter.

In einer Ausführungsform ist die Datenkommunikationsschnittstelle zu einer mit der mechanischen Anbindung gekoppelten informationsübertragenden Anbindung einer Aufsatzvorrichtung eingerichtet. Unter einer mit der mechanischen Anbindung "gekoppelten Anbindung" soll in diesem Zusammenhang insbesondere eine sich zumindest im Wesentlichen gleichzeitig mit der mechanischen Anbindung schließende informationsübertragende Anbindung verstanden werden.

Auf diese Weise ist in einer Ausführungsform des handgehaltenen Laserentfernungsmessgeräts die geräteseitige Koppelvorrichtung zur Übertragung einer Information, insbesondere einer Dateninformation, an eine an dem Laserentfernungsmessgerät angeordnete Aufsatzvorrichtung oder von einer an dem Laserentfernungsmessgerät angeordneten Aufsatzvorrichtung eingerichtet. Ferner ist auf diese Weise in einer Ausführungsform der Aufsatzvorrichtung die aufsatzseitige Koppelvorrichtung zur Übertragung einer Information, insbesondere einer Dateninformation, an die Steuervorrichtung des Laserentfernungsmessgeräts eingerichtet.

Auf diese Weise kann eine mittels der Aufsatzvorrichtung erzeugte Dateninformation vorteilhaft an die Steuervorrichtung des Laserentfernungsmessgeräts übertragen und von dieser weiter verarbeitet werden. Weiterverarbeitung bezeichnet dabei alle denkbaren Prozessschritte von Datenverarbeitung, Datenausgabe, Datenspeicherung oder dergleichen. Insbesondere kann eine Dateninformation in einer intuitiv verständlichen, insbesondere aufbereiteten Weise dem Bediener des Laserentfernungsmessgeräts ausgegeben werden.

Ferner kann mittels Anordnung der Aufsatzvorrichtung an das Laserentfernungsmessgerät eine Zusatzfunktionalität, beispielsweise eine Temperaturmessfunktionalität, bereitgestellt werden, wobei gegebenenfalls - je nach bereitgestellter Zusatzfunktionalität der Aufsatzvorrichtung - ermittelte Dateninformationen an die Steuervorrichtung der Laserentfernungsmessgerät übertragen werden und von dieser weiterverarbeitet werden können.

In einer Ausführungsform des handgehaltenen Laserentfernungsmessgeräts ist die Steuervorrichtung ferner dazu eingerichtet, einen angeordneten Zustand einer Aufsatzvorrichtung zu erfassen und/oder einen Typ einer angeordneten Aufsatzvorrichtung zu erfassen, insbesondere eine mechanische und/oder elektrische Kennung einer Aufsatzvorrichtung zu erfassen.

Auf diese Weise kann realisiert werden, dass das Laserentfernungsmessgerät in Folge des Erfassens einer angeordneten Aufsatzvorrichtung und/oder in Folge des Erfassens eines Typs einer angeordneten Aufsatzvorrichtung eine Funktion ausführt und/oder einen Betriebszustand ändert oder einnimmt. Unter einem Betriebszustand des Laserentfernungsmessgeräts soll insbesondere eine Informationsverarbeitung, eine Informationsausgabe und/oder eine Informationseingabe und/oder ein Informationseingang bezeichnet werden, in deren Zusammenhang das Laserentfernungsmessgerät ein Betriebsprogramm und/oder eine Regelroutine und/oder eine Steuerroutine und/oder eine Auswerteroutine und/oder eine Berechnungsroutine und/oder eine Anzeigeroutine oder dergleichen anwendet. Insbesondere bewirkt die Anwendung eines Betriebszustands eine Auswirkung auf die Funktion des Laserentfernungsmessgeräts.

Eine mechanische Kennung kann beispielsweise mittels eines Schalters oder Tasters realisiert werden, der bei Anordnen einer Aufsatzvorrichtung betätigt wird. Bevorzugt lässt sich ein derartiger elektrischer und/oder mechanischer Taster in funktionaler Verbindung mit einer Rastvorrichtung zum reversiblen Halten und Entfernen der Aufsatzvorrichtung an dem Gerätegehäuse des Laserentfernungsmessgeräts realisieren, sodass bei einer Anordnung der Aufsatzvorrichtung das Rastelement die Aufsatzvorrichtung in seiner Position hält, während gleichzeitig der elektrische und/oder mechanische Taster das Vorhandensein der Aufsatzvorrichtung, insbesondere dessen angeordneten Zustand, erfasst.

Zusätzlich oder alternativ lässt sich unter Verwendung einer elektrischen Kennung auf besonders zuverlässige Weise die Anordnung einer Aufsatzvorrichtung an dem Laserentfernungsmessgerät erfassen. Beispielsweise kann eine elektrische Kennung auf einfache Weise mittels Integration eines Kodierwiderstands in einer Aufsatzvorrichtung realisiert werden. Unter Verwendung einer Erfassungs- oder Ausleseschaltung in dem Laserentfernungsmessgerät lässt sich ein Widerstandswert des Kodierwiderstands auslesen, der, in Abhängigkeit des erhaltenen Werts, als Indikator für eine angeordnete Aufsatzvorrichtung interpretiert werden kann. Auf diese Weise kann in Abhängigkeit des ermittelten Widerstandswerts eine Anordnung einer jeweiligen Aufsatzvorrichtung an dem Laserentfernungsmessgerät erfasst und ferner auch unter verschiedenen Aufsatzvorrichtungen unterschieden werden.

In einer Ausführungsform weist das Laserentfernungsmessgerät Mittel zur Erfassung eines angeordneten Zustands in Form eines Sensor-Gegenstück-Paares, insbesondere eines Sensor-Betätiger- oder eines Sensor-Aktor-Paares, und/oder einen elektrischen Taster und/oder einen mechanischen Taster auf. Unter einem Sensor-Gegenstück-Paar ist insbesondere ein zweiteiliges System zu verstehen, bestehend aus einem Sensor sowie einem geeigneten Gegenstück-Element, sodass bei Erfassen einer physikalischen Eigenschaft des Gegenstück-Elements durch den Sensor der Sensor die Anwesenheit des Gegenstück-Elements detektiert. Insbesondere schließt dies auch Sensor-Betätiger-Paare ein. Beispiele derartiger Sensor-Gegenstück-Paare sind insbesondere magnetfeldsensitive Sensoren in Kombination mit Magneten, kapazitiv arbeitende Sensoren in Kombination mit Dielektrika, temperaturempfindliche Sensoren in Kombination mit Wärmestrahlung aussendenden Elementen oder lichtempfindliche Sensoren in Kombination mit Licht emittierenden Elementen. Insbesondere sei darauf hingewiesen, dass es sich bei dem Sensor des Sensor-Gegenstück-Paares nicht identisch um den Sensor zum Messen der Luftfeuchte und/oder der Umgebungstemperatur handelt. In diesem Sinne stellt der Sensor des Sensor-Gegenstück-Paares einen zusätzlichen Sensor dar, der die Funktionalität des Laserentfernungsmessgeräts zusätzlich erweitert. Unter Verwendung eines derartigen Sensor-Gegenstück-Paars kann eine zuverlässige Erfassung des angeordneten Zustands einer Aufsatzvorrichtung realisiert werden. Die zum Betrieb einer elektrischen Schaltung, insbesondere des Sensors des Sensor-Gegenstück-Paares, notwendige Energie kann in einer Ausführungsform des Laserentfernungsmessgeräts unmittelbar der Energieversorgungsvorrichtung des Laserentfernungsmessgeräts entnommen werden.

In einer Ausführungsform des erfindungsgemäßen Laserentfernungsmessgeräts weisen die Mittel zur Erfassung des angeordneten Zustands der zumindest einen Aufsatzvorrichtung einen magnetfeldsensitiven Sensor, insbesondere einen Hall-Sensor, auf. Ein Hall-Sensor ist ein magnetfeldsensitiver Sensor, der eine bevorzugte Ausführungsform eines abstandssensitiven Sensors des Sensor-Gegenstück-Paares darstellt. In Kombination mit einem Magneten lässt sich auf diese Weise ein Sensor-Gegenstück-Paar realisieren, das eine besonders zuverlässige Erfassung des angeordneten Zustands erlaubt. Dazu kann beispielsweise der Hall-Sensor in das Gehäuse des Laserentfernungsmessgeräts integrierten sein, während der Magnet als Gegenstück-Element Bestandteil der Aufsatzvorrichtung ist. Der Magnet als Bestandteil der Aufsatzvorrichtung kann ferner insbesondere zur stabilen Anordnung der Aufsatzvorrichtung an dem Laserentfernungsmessgerät verwendet werden. Auf diese Weise kann auf mechanische Bauteile zur Realisierung einer Halte- oder Rastvorrichtung verzichtet werden. Ferner kann unter Verwendung eines Hall-Sensor-Magnet-Paares vorteilhaft auf mechanische Bauteile zur Erfassung des angeordneten Zustands der zumindest einen Aufsatzvorrichtung verzichtet werden. Der Verzicht auf (elektro-)mechanische Bauteile, insbesondere Halte-, Hak-, Klemm-, Rastelemente, Taster oder dergleichen wirkt sich vorteilhaft auch auf den dauerhaften Erhalt der funktionalen Eigenschaften sowohl der Aufsatzvorrichtung als auch des Gehäuses aus, zumal Funktionseinschränkungen oder sogar Funktionsverlust in Folge eines Verdreckens oder Verschleißens der mechanischen Elemente - typischerweise verbunden mit Kontaktverlust und/oder Verhaken und Verkeilen der Elemente - vermieden werden.

In einer Ausführungsform des erfindungsgemäßen Laserentfernungsmessgeräts weisen die Mittel zur Erfassung des angeordneten Zustands der zumindest einen Aufsatzvorrichtung einen kapazitiven oder einen Ultraschall-sensitiven, insbesondere abstandssensitiven, Sensor auf. Unter Verwendung kapazitiver oder Ultraschall-sensitiver Sensoren, insbesondere kapazitiver oder Ultraschall-sensitiver Sensor-Gegenstück-Paare, lassen sich alternative kostengünstige Ausführungsformen des erfindungsgemäßen Laserentfernungsmessgeräts realisieren, bei denen ein angeordneter Zustand zuverlässig erfasst wird.

In einer Ausführungsform des erfindungsgemäßen Laserentfernungsmessgeräts weisen die Mittel zur Erfassung des angeordneten Zustands der zumindest einen Aufsatzvorrichtung einen Taster auf, der in einem angeordneten oder entfernten Zustand der Aufsatzvorrichtung betätigt wird. Ein derartiger Taster, insbesondere ein mechanischer und/oder elektrischer Taster, stellt eine vorteilhaft einfache Realisierung der Mittel zur Erfassung eines angeordneten Zustands dar. Bevorzugt kann ein derartiger, insbesondere elektrischer und/oder mechanischer, Taster gemeinsam mit zur stabilen Anordnung der zumindest einen Aufsatzvorrichtung vorgesehenen Mitteln, insbesondere Halte-, Hak-, Klemm- oder Rastelementen, ausgeführt sein. Besonders bevorzugt erfasst ein elektrischer Taster durch Kurzschluss oder Schließen eines elektrischen Schaltkreises infolge des Anordnens der Aufsatzvorrichtung dessen angeordneten Zustand. Somit kann eine zuverlässige und produktionstechnisch einfach realisierbare, daher wirtschaftlich besonders günstige Ausführungsform der Mittel zur Erfassung des angeordneten Zustands realisiert werden.

In einer Ausführungsform des handgehaltenen Laserentfernungsmessgeräts ist die Steuervorrichtung ferner dazu eingerichtet, in Abhängigkeit der Erfassung eines angeordneten Zustands der Aufsatzvorrichtung und/oder in Abhängigkeit der Erfassung des Typs der angeordneten Aufsatzvorrichtung ein elektrisches Signal an eine Ausgabevorrichtung des Laserentfernungsmessgeräts auszugeben und/oder eine Energieversorgung der geräteseitigen elektrischen Koppelvorrichtung, insbesondere eine Energieversorgung der am Laserentfernungsmessgerät angeordneten Aufsatzvorrichtung, zu steuern und/oder zu regeln.

Unter dem Typ einer angeordneten Aufsatzvorrichtung sind insbesondere die unterschiedlichen Ausführungen der Aufsatzvorrichtung, beispielsweise als eine Aufsatzvorrichtung mit Temperaturmessfunktionalität oder mit Luftdruckmessfunktionalität, zu verstehen.

Bevorzugt lässt sich auf diese Weise das Signal über die Erfassung des angeordneten Zustands der zumindest einen Aufsatzvorrichtung und/oder des Typs der angeordneten Aufsatzvorrichtung mittels der Steuervorrichtung des Laserentfernungsmessgeräts weiter verarbeiten. Vielfältige Ausführungsformen sind denkbar, bei denen das von dem Mittel generierte Signal ausgewertet, weitergeleitet und/oder an einen Bediener des Laserentfernungsmessgeräts ausgegeben wird.

Insbesondere ist die Steuervorrichtung des Laserentfernungsmessgeräts zu einer Auswertung zumindest einer, insbesondere mittels der Datenkommunikationsschnittstelle übermittelten, Information einer Aufsatzvorrichtung vorgesehen ist. Dadurch können beispielsweise Steuer- und/oder Regelgrößen spezifisch für die angeordnete Aufsatzvorrichtung eingestellt werden und somit ein Einsatz der zumindest einen Aufsatzvorrichtung optimiert werden. Ferner kann eine hohe Betriebssicherheit erreicht werden. Vorzugsweise ist die Steuervorrichtung dazu vorgesehen, einen Typ, eine Art oder eine Variante der Aufsatzvorrichtung, insbesondere mittels einer Zuordnung einer Kenngröße zu einem Referenzwert, zu bestimmen und/oder einen für die energetische Schnittstelle bereitgestellten Strom und/oder eine für die energetische Schnittstelle bereitgestellte Spannung in Abhängigkeit von einem Typ, einer Art oder einer Variante der Aufsatzvorrichtung, insbesondere zumindest im Wesentlichen automatisch oder halbautomatisch, zu steuern und/oder zu regeln. In vorteilhafter Weise steuert und/oder regelt die Steuervorrichtung in zumindest einem Betriebszustand eine Stromversorgung der Aufsatzvorrichtung, insbesondere eine Stromversorgung der energetischen Schnittstelle, in Abhängigkeit der Erfassung eines angeordneten Zustands der Aufsatzvorrichtung und/oder in Abhängigkeit der Erfassung des Typs der angeordneten Aufsatzvorrichtung. Somit kann das Laserentfernungsmessgerät mit der Aufsatzvorrichtung besonders sicher und zuverlässig betrieben werden. Es kann ein besonders effizienter und/oder besonders ressourcensparender Betrieb des Laserentfernungsmessgeräts mit der Aufsatzvorrichtung erreicht werden. Ein Bedienerkomfort kann weiter gesteigert werden.

Insbesondere können in einer Ausführungsform des Laserentfernungsmessgeräts Mittel vorgesehen sein, die es erlauben, in Folge der Erfassung einer angeordneten Aufsatzvorrichtung und/oder in Folge der Erfassung eines Typs einer angeordneten Aufsatzvorrichtung, eine Spannungswandlervorrichtung zur Anpassung einer Ausgangsspannung der zumindest einen Energieversorgungsvorrichtung zu aktivieren. Derartige Mittel können insbesondere elektrische Schaltungen, Schaltkreise, elektrische Schalter und/oder mechanische Schalter umfassen. Unter einer "Spannungswandlervorrichtung" ist in diesem Zusammenhang insbesondere ein Gleichspannungswandler zu verstehen, der eine elektrische Schaltung aufweist, die eine am Eingang der Vorrichtung zugeführte Gleichspannung in eine Gleichspannung mit höherem, niedrigerem oder invertiertem Spannungsniveau umwandelt. Insbesondere kann die Spannungswandlervorrichtung einen auf induktiven oder kapazitiven Effekten basierenden Gleichspannungswandler aufweisen. Die Spannungswandlervorrichtung dient bevorzugt zur Transformation der Ausgangsspannung oder Nennspannung der Energieversorgungsvorrichtung in eine erhöhte oder erniedrigte Arbeitsspannung einer Energienutzungseinheit einer am Laserentfernungsmessgerät angeordneten Aufsatzvorrichtung. Besonders vorteilhaft kann auf diese Weise realisiert werden, dass eine an dem Laserentfernungsmessgerät angeordnete Aufsatzvorrichtung, insbesondere eine Energienutzungseinheit der Aufsatzvorrichtung, eine zu dessen Betrieb notwendige Energie (Spannung, Strom) von der Energieversorgungsvorrichtung des Laserentfernungsmessgeräts zur Verfügung gestellt bekommt, unabhängig davon, welche Eingangsspannung die Aufsatzvorrichtung zum Betrieb benötigt.

Alternativ oder zusätzlich ist die Steuervorrichtung dazu vorgesehen, eine Emission eines Laserstrahls in Abhängigkeit von einem Typ, einer Art oder einer Variante einer an dem Laserentfernungsmessgerät angeordneten Aufsatzvorrichtung zu aktivieren und/oder zu deaktivieren und/oder eine Leistung, mit der der Laserstrahl emittiert wird, einzustellen.

Ferner können in Abhängigkeit der Erfassung eines angeordneten Zustands der Aufsatzvorrichtung und/oder in Abhängigkeit der Erfassung des Typs der angeordneten Aufsatzvorrichtung weitere, vielfältige Funktionen gesteuert und/oder ausgelöst werden. Beispielsweise kann eine Ausgabe einer Information, insbesondere eine von der angeordneten Aufsatzvorrichtung bereitgestellten Information, mittels einer Ausgabevorrichtung des Laserentfernungsmessgeräts initiiert werden.

Insbesondere kann ein Hinweis, dass sich eine bestimmte Aufsatzvorrichtung in einem angeordneten Zustand befindet, unter Verwendung der Ausgabevorrichtung des Laserentfernungsmessgeräts insbesondere akustisch, optisch, taktil oder anderweitig an einen Bediener des Laserentfernungsmessgeräts ausgegeben werden. Vorteilhaft kann auf diese Weise eine Warnung des Bedieners des Laserentfernungsmessgeräts erfolgen, die ihn auf mögliche Fehlmessungen, ungenaue Messungen und/oder auf Bedienhinweise hinweist. Ferner kann beispielsweise vorgesehen sein, einen Betrieb des Laserentfernungsmessgeräts zu sperren.

Ferner ist es möglich, das elektrische Signal als Grundlage zur Ausführung zumindest einer Zusatzfunktion des Laserentfernungsmessgeräts zu nutzen. Eine Vielzahl solcher Funktionen, die in Abhängigkeit der Erfassung des angeordneten Zustands der Aufsatzvorrichtung und/oder des Typs der angeordneten Aufsatzvorrichtung ausgeführt werden, ist denkbar. Beispielsweise lassen sich Funktionsmodi des Laserentfernungsmessgeräts bei Erfassen eines angeordneten Zustands einer bestimmten Aufsatzvorrichtung realisieren. Alternativ oder zusätzlich können auch Funktionserweiterungen vorgesehen sein, beispielsweise ein Rückgriff auf geräteintern vorgehaltene Kalibrierdaten zur Kalibrierung der entsprechenden Aufsatzvorrichtung.

Unter Verwendung der Koppelvorrichtung wird ein einfacher Austausch der jeweiligen Aufsatzvorrichtung realisierbar, sodass das Laserentfernungsmessgerät situationsabhängig mit jeweils unterschiedlichen Aufsatzvorrichtungen bestückt werden kann. Vorteilhaft kann eine Aufsatzvorrichtung durch einen Bediener des Laserentfernungsmessgeräts vor Durchführung einer Funktion gewählt, insbesondere entfernt, getauscht oder angeordnet werden. Auf diese Weise erlaubt das erfindungsgemäße Laserentfernungsmessgerät in Zusammenwirken mit einer erfindungsgemäßer Aufsatzvorrichtung die Bereitstellung einer Zusatzfunktionalität, die, alternativ zur Entfernungsmessung des Laserentfernungsmessgeräts unter Verwendung einer wählbaren Aufsatzvorrichtung, auch die Verwendung des Laserentfernungsmessgeräts zur Durchführung weiterer Aufgaben ermöglicht. Die Wahl der Aufsatzvorrichtung erfolgt dabei unter Auswahl einer situationsabhängig jeweils bevorzugten Aufsatzvorrichtung, die dann an dem Laserentfernungsmessgerät reversibel lösbar angeordnet wird.

Es sei erwähnt, dass in einer Ausführungsform des Laserentfernungsmessgeräts und/oder der Aufsatzvorrichtung es ebenfalls denkbar ist, mehr als eine Aufsatzvorrichtung an dem Laserentfernungsmessgerät anzuordnen. Insbesondere ist denkbar, mehrere Aufsatzvorrichtungen derart hintereinander an dem Laserentfernungsmessgerät anzuordnen, dass im Sinne einer Reihenkopplung jede weitere Aufsatzvorrichtung an einer bereits am Laserentfernungsmessgerät angeordneten Aufsatzvorrichtung reversibel abnehmbar angeordnet wird. Derart können beispielsweise mehr als eine Zusatzfunktionalität des Laserentfernungsmessgeräts bereitgestellt werden.

Unter einer "Zusatzfunktionalität" ist insbesondere eine Funktionalität des Laserentfernungsmessgeräts zu verstehen, die, zusätzlich oder alternativ zur Funktionalität der berührungslosen Entfernungsmessung des Laserentfernungsmessgeräts, unter Verwendung einer Aufsatzvorrichtung bereitstellbar ist, wenn das Laserentfernungsmessgerät mit der für eine jeweilige Zusatzfunktion spezifischen Aufsatzvorrichtung versehen, insbesondere bestückt ist - die Aufsatzvorrichtung also an dem Laserentfernungsmessgerät angeordnet ist. Insbesondere kann eine Aufsatzvorrichtung eine zusätzliche oder alternative Werkzeugfunktionalität und/oder eine zusätzliche oder alternative Messfunktionalität bereitstellen.

Somit kann ein besonders vielseitig nutzbares Laserentfernungsmessgerät bereitgestellt werden. Insbesondere können Aufsatzvorrichtungen mit elektrischen Zusatzfunktionen genutzt werden, wobei die Energieversorgung der Aufsatzvorrichtung vorteilhaft unter Verwendung der Energieversorgungsvorrichtung des Laserentfernungsmessgeräts bereitgestellt wird. Ressourcen, wie beispielsweise eine Energieversorgung des Laserentfernungsmessgeräts, können besonders wirtschaftlich eingesetzt werden. Eine zusätzliche Energieversorgung für die Aufsatzvorrichtung kann eingespart werden. Ferner kann ein hoher Bedienerkomfort erreicht werden.

In einer Ausführungsform kann eine Aufsatzvorrichtung - ähnlich wie das Laserentfernungsmessgerät - ebenfalls elektronische Komponenten umfassen wie beispielsweise eine Steuervorrichtung, eine Energieversorgungsvorrichtung, eine Sensorvorrichtung oder dergleichen. Alternativ kann eine Aufsatzvorrichtung auch ohne elektronische Komponenten ausgeführt sein, beispielsweise als Aufsatzvorrichtung, mittels der der von dem Laserentfernungsmessgerät emittierte Laserstrahl umgelenkt wird. In einem derartigen Ausführungsbeispiel kann die Aufsatzvorrichtung beispielsweise lediglich einen Spiegel aufweisen.

In einer Ausführungsform weist die Aufsatzvorrichtung keine Bauelemente auf, die bereits in dem Laserentfernungsmessgerät vorgesehen sind. Derart kann insbesondere auf zusätzliche Bedienelemente und/oder eine zusätzliche Energieversorgungsvorrichtung und/oder eine zusätzliche Steuervorrichtung oder dergleichen verzichtet werden. Auf diese Weise kann eine besonders leichte und kleinbauende Aufsatzvorrichtung realisiert werden. Insbesondere können, sofern derartige Bauelemente zur Funktionalität der Aufsatzvorrichtung benötigt werden, auf entsprechende Bauelemente des Laserentfernungsmessgeräts zurückgegriffen werden, wobei eine energetische und/oder eine informationsübertragende Anbindung unter Verwendung der Energieschnittstellen bzw. der Datenkommunikationsschnittstellen erfolgt. Beispielsweise kann somit ein von einer Aufsatzvorrichtung ermittelter Messwert an die Steuervorrichtung des Laserentfernungsmessgeräts übertragen und von diesem unter Verwendung dessen Ausgabevorrichtung an einen Bediener des Laserentfernungsmessgeräts ausgegeben werden.

In einer Ausführungsform der Aufsatzvorrichtung ist die Aufsatzvorrichtung dazu eingerichtet, in an dem Laserentfernungsmessgerät angeordnetem Zustand einen emittierten Laserstrahl des Laserentfernungsmessgeräts unter Verwendung eines optischen Elements, insbesondere unter Verwendung eines Spiegels, umzulenken, bevorzugt um einen Winkel von 90° umzulenken.

Auf diese Weise kann auf besonders einfache Weise die Richtung, in die das Laserentfernungsmessgerät eine Entfernungsmessung durchführt, geändert oder angepasst werden. Vorteilhaft ist die Aufsatzvorrichtung oder das optische Element drehbar um diejenige Achse gelagert, die der Emissionsrichtung des Laserstrahls ohne Aufsatzvorrichtung entspricht. Derart kann der um einen Winkel von 90° umgelenkte Laserstrahl um diejenige Achse rotiert werden, in die das Laserentfernungsmessgerät den Laserstrahl ohne Aufsatzvorrichtung emittiert. Die Umlenkung des Laserstrahls kann unter Verwendung beliebiger strahlformender und/oder strahllenkender optischer Elemente erfolgen, insbesondere beispielsweise Linsen, diffraktive Elemente, Spiegel, Reflektoren, optisch transparente Scheiben oder dergleichen.

In einer Ausführungsform der Aufsatzvorrichtung ist die Aufsatzvorrichtung dazu eingerichtet, in an dem Laserentfernungsmessgerät angeordnetem Zustand einen emittierten Laserstrahl des Laserentfernungsmessgeräts unter Verwendung eines optischen Elements, insbesondere unter Verwendung eines reflektierenden Kegelspiegels, derart umzulenken, dass eine auf einen entfernten Gegenstand projizierbare Laserlinie entsteht, insbesondere eine über einen Winkelbereich von 360° auf einen entfernten Gegenstand projizierbare Laserlinie entsteht.

Der Kegelspiegel weist dabei eine Kegelachse auf und ist dazu ausgebildet, den von dem Laserentfernungsmessgerät, bevorzugt koaxial zur Kegelachse, in Richtung des reflektierenden Kegelspiegels emittierten Laserstrahl in eine Laserebene umzuwandeln, die anschließend emittiert wird, insbesondere über einen Winkelbereich von 360° emittiert wird. Somit kann durch Verwendung des Kegelspiegels der Laserstrahl einfach und unkompliziert in die Laserebene umgewandelt werden. Vorteilhaft kann das Laserentfernungsmessgerät unter Verwendung der Aufsatzvorrichtung somit als Nivelliervorrichtung, insbesondere als sog. 360°-Linienlaser, verwendet werden.

In einer Ausführungsform der Aufsatzvorrichtung ist die Aufsatzvorrichtung dazu eingerichtet, in an dem Laserentfernungsmessgerät angeordnetem Zustand einen emittierten Laserstrahl des Laserentfernungsmessgeräts unter Verwendung zumindest eines optischen Elements, insbesondere unter Verwendung zumindest einer Zylinderlinse, derart umzulenken, dass eine auf einen entfernten Gegenstand projizierbare Laserlinie entsteht. Vorteilhaft kann das Laserentfernungsmessgerät unter Verwendung der Aufsatzvorrichtung somit als Nivelliervorrichtung, insbesondere als sog. Linienlaser, verwendet werden. Die Verwendung einer Zylinderlinse stellt dabei eine wirtschaftlich besonders günstige Möglichkeit dar, eine zumindest über einen bestimmten Winkelbereich projizierbare Laserlinie zu erzeugen.

In einer Ausführungsform der Aufsatzvorrichtung ist die Aufsatzvorrichtung dazu eingerichtet, in an dem Laserentfernungsmessgerät angeordnetem Zustand einen emittierten Laserstrahl des Laserentfernungsmessgeräts unter Verwendung zumindest eines optischen Elements, insbesondere unter Verwendung zumindest zweier Zylinderlinsen, derart umzulenken, dass zwei auf einen entfernten Gegenstand projizierbare Laserlinien entstehen, die bevorzugt unter einem Winkel von 90° zueinander ausgerichtet sind, die besonders bevorzugt einander unter einem Winkel von 90° schneiden. Vorteilhaft kann das Laserentfernungsmessgerät unter Verwendung der Aufsatzvorrichtung somit als Nivelliervorrichtung, insbesondere als sog. Kreuzlinienlaser, verwendet werden.

In einer Ausführungsform der Aufsatzvorrichtung weist die Aufsatzvorrichtung zumindest eine elektrische Energienutzungseinheit auf, wobei die Energienutzungseinheit in an dem Laserentfernungsmessgerät angeordneten Zustand von einer Energieversorgungsvorrichtung des Laserentfernungsmessgeräts mit Energie versorgbar ist.

In einer Ausführungsform der Aufsatzvorrichtung weist die Aufsatzvorrichtung eine Lichtquelle, insbesondere eine LED, auf. Vorteilhaft kann das Laserentfernungsmessgerät unter Verwendung der Aufsatzvorrichtung somit als LED-Lampe bzw. als Taschenlampe verwendet werden.

In einer Ausführungsform der Aufsatzvorrichtung ist die Aufsatzvorrichtung dazu eingerichtet, in an dem Laserentfernungsmessgerät angeordnetem Zustand einen emittierten Laserstrahl des Laserentfernungsmessgeräts unter Verwendung zumindest eines optischen Elements, insbesondere eines Filters, derart zu modifizieren, dass eine LED-Lampenfunktionalität bereitstellbar ist.

In einer Ausführungsform der Aufsatzvorrichtung ist die Aufsatzvorrichtung dazu eingerichtet, in an dem Laserentfernungsmessgerät angeordnetem Zustand eine zusätzliche oder alternative Funktionalität aus einer Liste von Funktionalitäten bereitzustellen, die zumindest umfasst: Maßbandfunktionalität, Streckenmessfunktionalität, Temperaturmessfunktionalität, Feuchtigkeitsmessfunktionalität, Luftdruckmessfunktionalität, Luftfeuchtemessfunktionalität, Lufttemperaturmessfunktionalität, Kohlenstoffdioxidmessfunktionalität, Rauchdetektionsfunktionalität, Erschütterungsdetektionsfunktionalität, Bewegungsdetektionsfunktionalität, Profiltiefenmessfunktionalität, Nivellierfunktionalität.

Eine Maßbandfunktionalität kann beispielsweise unter Verwendung eines aus der Aufsatzvorrichtung herausziehbaren Bandes realisiert sein. Dieses Band kann vorteilhaft auf einer selbstrückstellenden Rolle in dem Aufsatzgehäuse geführt sein. Vorteilhaft kann die Länge der aus der Aufsatzvorrichtung herausgezogenen Bandes elektronisch erfassbar und einem Bediener des Laserentfernungsmessgeräts unter Verwendung der Ausgabevorrichtung ausgebbar sein. Vorteilhaft kann das Laserentfernungsmessgerät unter Verwendung der Aufsatzvorrichtung somit zur einfachen Ermittlung von Längen und/oder Entfernungen verwendet werden, die nicht notwendigerweise durch eine Gerade verbindbar sind (gekrümmte Oberfläche oder dergleichen).

Eine Streckenmessfunktionalität kann beispielsweise unter Verwendung eines in der entsprechenden Aufsatzvorrichtung gelagerten Rades und/oder eines Maussensors zur Positionsbestimmung realisiert sein. Dieses Rad bzw. der Maussensor detektiert eine Bewegung der Aufsatzvorrichtung über eine Oberfläche. Vorteilhaft kann die Länge des mit der Aufsatzvorrichtung überstrichenen Streckenabschnitts elektronisch erfassbar und einem Bediener des Laserentfernungsmessgeräts unter Verwendung der Ausgabevorrichtung ausgebbar sein. Vorteilhaft kann das Laserentfernungsmessgerät unter Verwendung der Aufsatzvorrichtung somit zur einfachen Ermittlung von Längen undefinierter Strecken auf Oberflächen verwendet werden, die nicht notwendigerweise durch eine Gerade verbindbar sind (gekrümmte Oberfläche oder dergleichen). Ferner sind freie Strecken leicht durch einen Bediener des Laserentfernungsmessgeräts abfahrbar und somit deren Länge ermittelbar.

Eine Temperaturmessfunktionalität kann beispielsweise unter Verwendung eines Temperatursensors, beispielsweise eines Infrarottemperatursensor, bereitgestellt werden. Vorteilhaft kann das Laserentfernungsmessgerät unter Verwendung der Aufsatzvorrichtung somit zur einfachen Ermittlung von Temperaturen, beispielsweise Oberflächentemperaturen, Körpertemperaturen oder dergleichen, verwendet werden. Ferner kann eine ermittelte Temperatur elektronisch erfassbar und einem Bediener des Laserentfernungsmessgeräts unter Verwendung der Ausgabevorrichtung ausgebbar sein.

Eine Feuchtigkeitsmessfunktionalität kann beispielsweise durch einen Feuchtigkeitssensor, beispielsweise einen Umgebungsfeuchtesensor, bereitgestellt werden. orteilhaft kann das Laserentfernungsmessgerät unter Verwendung der Aufsatzvorrichtung somit zur einfachen Ermittlung einer Feuchte, insbesondere einer Umgebungsfeuchte, verwendet werden. Ferner kann eine ermittelte Feuchte elektronisch erfassbar und einem Bediener des Laserentfernungsmessgeräts unter Verwendung der Ausgabevorrichtung ausgebbar sein.

Eine Luftdruckmessfunktionalität kann beispielsweise durch einen Luftdrucksensor, eine Luftfeuchtemessfunktionalität durch einen Luftfeuchtesensor, eine Lufttemperaturmessfunktionalität durch einen Lufttemperatursensor und eine Kohlenstoffdioxidmessfunktionalität durch einen Kohlenstoffdioxidsensor bereitgestellt werden. Vorteilhaft kann das Laserentfernungsmessgerät unter Verwendung der Aufsatzvorrichtung somit zur einfachen Ermittlung eines Luftdrucks und/oder einer Luftfeuchte und/oder einer Lufttemperatur und/oder einer Kohlenstoffdioxidkonzentration verwendet werden. Insbesondere können die Messwerte elektronisch erfassbar und einem Bediener des Laserentfernungsmessgeräts unter Verwendung der Ausgabevorrichtung ausgebbar sein.

Eine Rauchdetektionsfunktionalität kann beispielsweise durch einen Rauchsensor bereitgestellt werden. Vorteilhaft kann das Laserentfernungsmessgerät unter Verwendung der Aufsatzvorrichtung somit zur Überwachung eines Raumes oder dergleichen hinsichtlich einer Rauchentwicklung genutzt werden. Im Falle der Detektion von Rauch kann ein, beispielsweise akustisches, Warnsignal an einen Bediener des Laserentfernungsmessgeräts ausgegeben werden.

Eine Erschütterungsdetektionsfunktionalität und/oder eine Bewegungsdetektionsfunktionalität kann beispielsweise unter Verwendung eines Erschütterungssensor bzw. eines Bewegungssensor bereitgestellt werden. Vorteilhaft kann das Laserentfernungsmessgerät unter Verwendung der Aufsatzvorrichtung somit zur Überwachung eines Raumes hinsichtlich einer Bewegung oder Erschütterung verwendet werden. Im Falle der Detektion von Erschütterungen und/oder Bewegungen kann ein Warnsignal an einen Bediener des Laserentfernungsmessgeräts ausgegeben werden.

Eine Profiltiefenmessfunktionalität kann beispielsweise unter Verwendung eines schiebbaren Dorns oder dergleichen realisiert sein (ähnlich einer mechanischen Schieblehre oder einer Mikrometerschraube), bei dem wegabhängig ein Messwert erzeugt wird. Vorteilhaft kann das Laserentfernungsmessgerät unter Verwendung der Aufsatzvorrichtung somit zur einfachen Ermittlung von Tiefen, Profiltiefen oder dergleichen, verwendet werden.

Eine Nivellierfunktionalität kann beispielsweise unter Verwendung einer Libelle realisiert sein. Alternativ oder zusätzlich kann die Nivellierfunktionalität auch als eine elektronische Libelle realisiert sein, beispielsweise unter Verwendung einer Inertialsensorik, einer Beschleunigungssensorik, oder dergleichen. Vorteilhaft kann das Laserentfernungsmessgerät unter Verwendung der Aufsatzvorrichtung somit zur einfachen Ermittlung eines Nivellierzustands verwendet werden.

In einer Ausführungsform der Aufsatzvorrichtung weist die Aufsatzvorrichtung eine Kommunikationsschnittstelle zur drahtlosen Kommunikation mit einem externen Datengerät auf, insbesondere zur Übermittlung von Informationen an ein externes Datengerät oder von einem externen Datengerät. Vorteilhaft können mittels der Kommunikationsschnittstelle Messergebnisse und/oder Arbeitsparameter von dem Laserentfernungsmessgerät und/oder der Aufsatzvorrichtung an ein externes Datengerät, beispielsweise an ein Smartphone, einen Tablet-PC, einen PC, einen Drucker oder weitere einem Fachmann als sinnvoll erscheinende externe Geräte gesendet werden oder von diesen empfangen werden. Derart kann eine Übertragung von Daten ermöglicht werden, die zu einer weiteren Auswertung von mit der Aufsatzvorrichtung erfassten Messsignalen nutzbar ist. Ferner können vielfältige Zusatzfunktionen ermöglicht und eingebunden werden, die insbesondere auch eine direkte Kommunikation mit Smartphones (insbesondere über programmierte Apps) oder ähnlichen portablen Datengeräten erfordern. Diese können beispielsweise automatische Kartierungs-Funktionen, Firmware-Updates, Datennachbearbeitung, Datenaufbereitung, Datenabgleich mit anderen Geräten, etc. umfassen. Insbesondere kann die Kommunikationsschnittstelle durch eine Bluetooth-oder WLAN- oder Funkschnittstelle oder dergleichen realisiert sein.

In einer Ausführungsform sind die geräteseitige Koppelschnittstelle sowie die aufsatzseitige Koppelschnittstelle, ferner das Gerätegehäuse und das Aufsatzgehäuse, derart aufeinander abgestimmt, dass die Aufsatzvorrichtung eine Gehäuseform des Laserentfernungsmessgeräts, insbesondere konturschlüssig, fortsetzt. Beispielsweise kann das Gerätegehäuse des Laserentfernungsmessgeräts als ein im Wesentlichen quaderförmiges, stabförmiges Gehäuse mit einer Elongation in Längsrichtung realisiert sein, wobei eine an dem Gerätegehäuse des Laserentfernungsmessgeräts angeordnete Aufsatzvorrichtung (oder auch mehrere angeordnete Aufsatzvorrichtungen) die Gehäuseform in Längsrichtung des stabförmigen Gerätegehäuses fortsetzt. Dabei schließt die Aufsatzvorrichtung bevorzugt der Form des Gerätegehäuses folgend (konturschlüssig) an die Quaderform des Gerätegehäuses des Laserentfernungsmessgeräts an.

Abschließend wird ein System bestehend aus zumindest einem, insbesondere eigenständig nutzbaren, handgehaltenen Laserentfernungsmessgerät und zumindest einer Aufsatzvorrichtung, bevorzugt einer Mehrzahl von Aufsatzvorrichtungen, vorgeschlagen.

Wie bereits erwähnt, sei nochmals darauf hingewiesen, dass die Beschreibungen der verschiedenen Schnittstellen (Koppelschnittstelle, Energieschnittstelle, Datenkommunikationsschnittstelle etc.), die sich auf konkrete Zuordnungen von Merkmalen zu einer der korrespondierend ausgeformten Hälften der Schnittstelle beziehen, selbstverständlich auch spiegelbildliche Ausführungen einschließen, bei denen die Merkmale entsprechend vertauscht sind. Beispielsweise soll bei Beschreibung einer geräteseitigen Koppelschnittstelle in Form einer Rastnase und einer aufsatzseitigen Koppelschnittstelle in Form einer Ausnehmung gleichermaßen auch eine geräteseitige Koppelschnittstelle in Form einer Ausnehmung und eine aufsatzseitige Koppelschnittstelle in Form einer Rastnase verstanden werden.

### Zeichnungen

Die Erfindung ist anhand von in den Zeichnungen dargestellten Ausführungsbeispielen in der nachfolgenden Beschreibung näher erläutert. Die Zeichnungen, die Beschreibung und die Ansprüche enthalten zahlreiche Merkmale in Kombination. Der Fachmann wird die Merkmale zweckmäßiger Weise auch einzeln betrachten und zu sinnvollen weiteren Kombinationen zusammenfassen. Gleiche Bezugszeichen in den Figuren bezeichnen gleiche Elemente.

Es zeigen:
- Figur 1: ein System bestehend aus einer Mehrzahl an Aufsatzvorrichtungen und einem handgehaltenen Laserentfernungsmessgerät,
- Figur 2: eine Ausführungsform einer Aufsatzvorrichtung, die eine Streckenmessfunktionalität bereitstellt,
- Figur 3: eine Ausführungsform einer Aufsatzvorrichtung, die eine Maßbandfunktionalität bereitstellt,
- Figur 4: eine Ausführungsform einer Aufsatzvorrichtung, die eine Nivellierfunktionalität bereitstellt,
- Figur 5: eine Ausführungsform einer aufsatzseitigen Koppelvorrichtung und einer geräteseitigen Koppelvorrichtung,
- Figur 6: eine alternative Ausführungsform einer aufsatzseitigen Koppelvorrichtung und einer geräteseitigen Koppelvorrichtung,
- Figur 7: eine schematische Darstellung zur Handhabung einer aufsatzseitigen Koppelvorrichtung nach Figur 6,
- Figur 8a-8e: Schnittdarstellungen von Ausführungsformen aufsatzseitiger Koppelvorrichtung, insbesondere aufsatzseitiger Koppelschnitstellen
- Figur 9: eine Ausführungsform einer aufsatzseitigen Koppelschnitstelle und einer geräteseitigen Koppelschnitstelle,
- Figuren 10a-10g: alternative Ausführungsformen von aufsatzseitigen Koppelvorrichtungen und geräteseitigen Koppelvorrichtungen

### Beschreibung der Ausführungsbeispiele

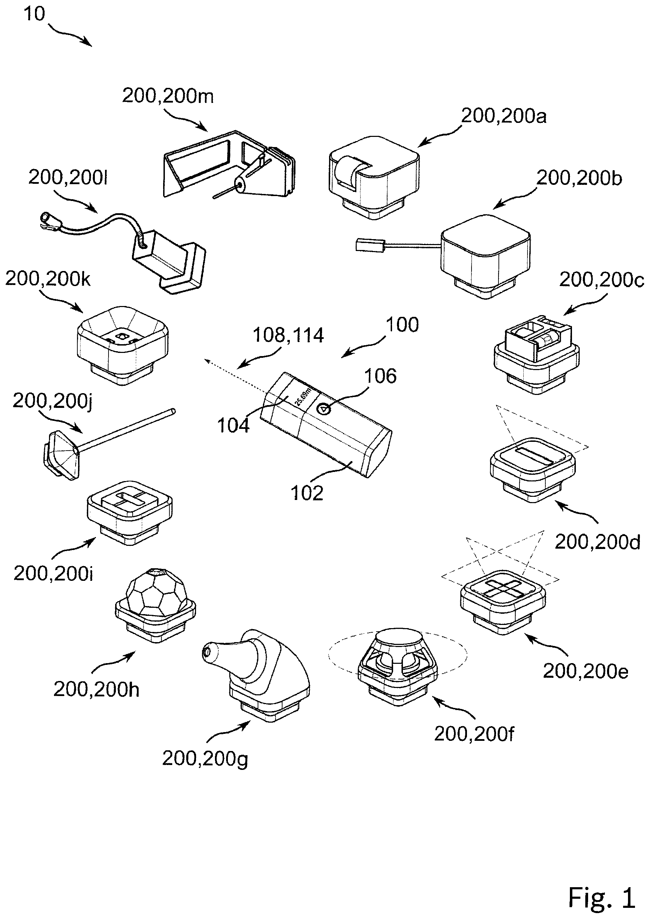

Figur 1 zeigt in schematischer Perspektivdarstellung beispielhaft ein erfindungsgemäßes System 10 bestehend aus einem handgehaltenen Laserentfernungsmessgerät 100 zur berührungslosen Entfernungsmessung zwischen dem Laserentfernungsmessgerät 100 und einem entfernten Gegenstand (nicht näher dargestellt) und einer Mehrzahl von Aufsatzvorrichtungen 200.

Das handgehaltene Laserentfernungsmessgerät 100 weist ein Gerätegehäuse 102 auf, einen berührungssensitiven Bildschirm als Ein- und Ausgabevorrichtung 104 sowie ein Betätigungselement 106 zum Ein- und Ausschalten des Laserentfernungsmessgeräts 100 und zum Starten und/oder Beenden eines Messvorgangs. Das handgehalte Laserentfernungsmessgerät 100 wiegt in der dargestellten Ausführung weniger als 300 g, wobei die längste Seite des Gerätegehäuses 102 weniger als 15 cm misst.

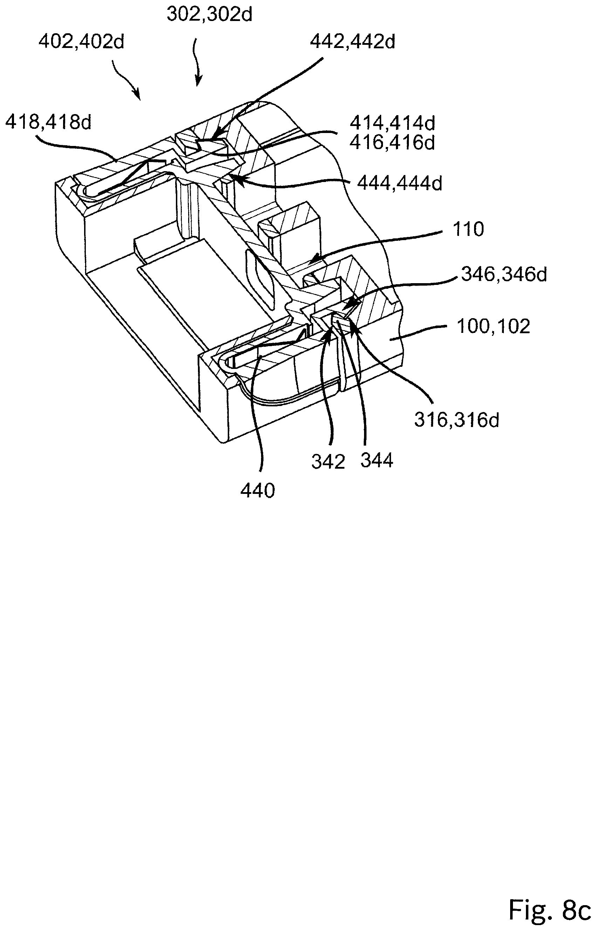

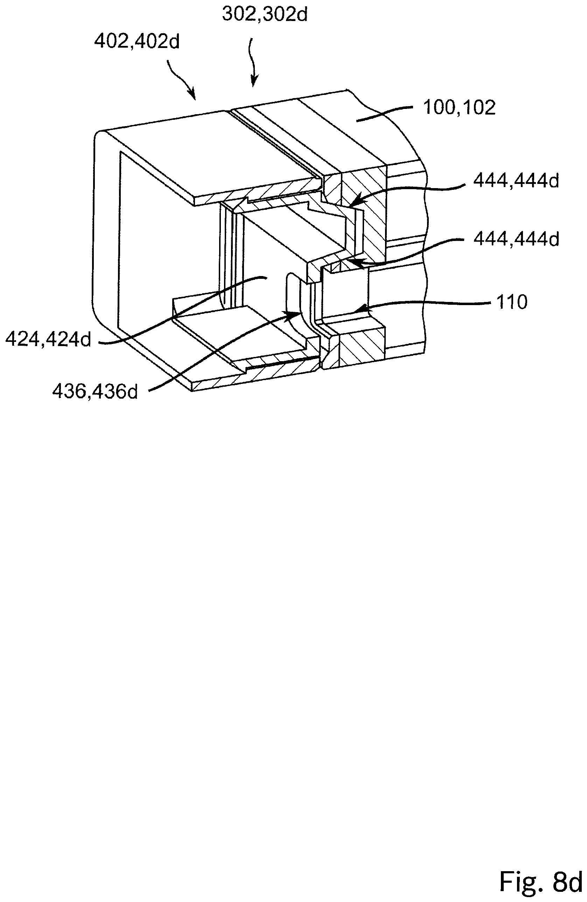

Zur Messung des Abstands des Laserentfernungsmessgeräts 100 zu einem Zielobjekt (hier nicht näher dargestellt) wird im Betrieb des Laserentfernungsmessgeräts 100 parallele Laserstrahlung 108 über eine Sendeoptik 110 (vgl. beispielsweise Figuren 8c oder 8d), die beispielsweise aus einem nicht näher dargestellten Linsensystem besteht, in Richtung des Zielobjekts gesendet. Die von einer Oberfläche des Zielobjekts reflektierte Laserstrahlung (hier nicht näher dargestellt) wird über eine Empfangsoptik 112 auf eine nicht näher dargestellte Detektorvorrichtung geleitet und dort detektiert. Aus einem zwischen der ausgesendeten Laserstrahlung 108 und der von der Oberfläche des entfernten Gegenstands reflektierten Laserstrahlung durchgeführten Phasenvergleich kann eine Lichtlaufzeit ermittelt und über die Lichtgeschwindigkeit die gesuchte Entfernung zwischen dem Laserentfernungsmessgerät 100 und dem Zielobjekt in der entsprechenden Entfernungsmessrichtung 114 (Richtung der Emission der Laserstrahlung 108) bestimmt werden. Die Laserstrahlung 108 ist in diesem Ausführungsbeispiel als rotes Laserlicht realisiert. Auf dem Zielobjekt erzeugt die emittierte Laserstrahlung 108 einen projizierten Laserpunkt.

Das Laserentfernungsmessgerät 100 weist innerhalb des Gerätegehäuses 102 eine Laserdiode zur Erzeugung der Laserstrahlung 108, eine Detektorvorrichtung, eine Steuervorrichtung und eine Energieversorgungsvorrichtung auf (jeweils nicht näher dargestellt). Die hier nicht näher dargestellte Energieversorgungsvorrichtung dient der Energieversorgung des Laserentfernungsmessgeräts 100 - sowie einer gegebenenfalls an dem Laserentfernungsmessgerät 100 angeordneten Aufsatzvorrichtung 200 - wobei die Energieversorgungsvorrichtung in einem Ausführungsbeispiel eine Batterie oder einen Akkumulator, bevorzugt einen Lithium-Ionen-Akkumulator, umfasst. Die Detektorvorrichtung weist in diesem Ausführungsbeispiel zumindest eine Single-Photon-Avalanche-Diode (SPAD), bevorzugt ein SPAD-Array, auf. Die Steuervorrichtung ist dazu vorgesehen, aus einem zwischen der ausgesendeten Laserstrahlung und der von der Oberfläche des Zielobjekts rücklaufenden Laserstrahlung durchgeführten Phasenvergleich eine Lichtlaufzeit zu ermitteln und über die Lichtgeschwindigkeit den gesuchten Abstand zwischen dem Laserentfernungsmessgerät 100 und dem Zielobjekt zu ermitteln. Ferner ist die Steuervorrichtung dazu vorgesehen, den Betrieb des Laserentfernungsmessgeräts 100 zu ermöglichen, insbesondere die verwendeten Komponenten des Laserentfernungsmessgeräts 100 zu steuern und/oder zu regeln.

Ein ermittelter Entfernungsmesswert - und/oder ein von einer angeordneten Aufsatzvorrichtung 200 bereitgestellte Dateninformation, beispielsweise ein Messwert - kann von der Steuervorrichtung des Laserentfernungsmessgeräts 100 weiterverarbeitet und/oder mittels der Ausgabevorrichtung 104 an einen Bediener des Laserentfernungsmessgeräts 100 ausgegeben werden.

Ferner sind in Figur 1 eine Vielzahl von unterschiedlichen Aufsatzvorrichtungen 200 zur Anordnung an einem handgehaltenen Laserentfernungsmessgerät 100 dargestellt. Im Folgenden werden die unterschiedlichen Ausführungsformen von Aufsatzvorrichtungen 200 - sofern zur Unterscheidung nötig - mit den Bezugszeichenindices "a" bis "m" gekennzeichnet. Jede der Aufsatzvorrichtungen 200 (entsprechend also 200a-200m) weist ein Aufsatzgehäuse 202 (entsprechend 202a-202m) auf, welches die wesentlichen funktionalen Komponenten der jeweiligen Aufsatzvorrichtung 200 - beispielsweise elektronische und/oder optische Komponenten - zumindest im Wesentlichen umgibt, umschließt und/oder hält. Das Aufsatzgehäuse 202 stellt dabei einen wesentlichen Bestandteil der Aufsatzvorrichtung 200 dar.

Jede der Aufsatzvorrichtungen 200 ist zur reversiblen Anordnung zumindest an dem Laserentfernungsmessgerät 100 eingerichtet, wobei durch die Anordnung der jeweiligen Aufsatzvorrichtung 200 an dem Laserentfernungsmessgerät 100 zumindest eine Zusatzfunktionalität bereitstellbar ist. Dabei kann die Zusatzfunktionalität insbesondere eine alternative oder eine zusätzliche Funktionalität des Laserentfernungsmessgeräts 100 bereitstellen, die ohne Aufsatzvorrichtung 200 nicht bereitsteht.

Die in Figur 1 dargestellten Aufsatzvorrichtungen 200, die mit dem Laserentfernungsmessgerät 100 verwendet werden können, umfassen in diesem Ausführungsbeispiel folgende Zusatzfunktionalität: Aufsatzvorrichtung 200a ist dazu eingerichtet, in an dem Laserentfernungsmessgerät 100 angeordnetem Zustand eine Streckenmessfunktionalität bereitzustellen. Aufsatzvorrichtung 200b ist dazu eingerichtet, in an dem Laserentfernungsmessgerät 100 angeordnetem Zustand eine Maßbandfunktionalität bereitzustellen. Aufsatzvorrichtung 200c ist dazu eingerichtet, in an dem Laserentfernungsmessgerät 100 angeordnetem Zustand eine Nivellierfunktionalität bereitzustellen. Aufsatzvorrichtung 200d ist dazu eingerichtet, in an dem Laserentfernungsmessgerät 100 angeordnetem Zustand den emittierten Laserstrahl 108 des Laserentfernungsmessgeräts 100 unter Verwendung zumindest eines optischen Elements, insbesondere unter Verwendung einer Zylinderlinse, derart umzulenken, dass eine auf einen entfernten Gegenstand projizierbare Laserlinie entsteht (ein emittierter Lehrfächer ist gestrichelt angedeutet). Aufsatzvorrichtung 200e ist dazu eingerichtet, in an dem Laserentfernungsmessgerät 100 angeordnetem Zustand den emittierten Laserstrahl 108 des Laserentfernungsmessgeräts 100 unter Verwendung zumindest zweier Zylinderlinsen derart umzulenken, dass zwei auf einen entfernten Gegenstand projizierbare Laserlinien entstehen, die einander unter einem Winkel von 90° schneiden (zwei emittierte Lehrfächer sind gestrichelt angedeutet). Aufsatzvorrichtung 200f ist dazu eingerichtet, in an dem Laserentfernungsmessgerät 100 angeordnetem Zustand den emittierten Laserstrahl 108 unter Verwendung eines nicht näher dargestellten Spiegels umzulenken. Aufsatzvorrichtung 200f ist dazu vorgesehen, unter Verwendung eines reflektierenden Kegelspiegels den Laserstrahl 108 derart umzulenken, dass eine auf einen entfernten Gegenstand projizierbare Laserlinie entsteht, insbesondere eine über einen Winkelbereich von 360° auf einen entfernten Gegenstand projizierbare Laserlinie entsteht (über den Winkelbereich von 360° emittierter Lehrfächer ist gestrichelt angedeutet). Aufsatzvorrichtung 200g ist dazu eingerichtet, in an dem Laserentfernungsmessgerät 100 angeordnetem Zustand eine Temperaturmessfunktionalität bereitzustellen. Aufsatzvorrichtung 200h ist dazu eingerichtet, in an dem Laserentfernungsmessgerät 100 angeordnetem Zustand eine Luftdruckmessfunktionalität sowie eine Luftfeuchtemessfunktionalität sowie eine Lufttemperaturmessfunktionalität sowie eine Kohlenstoffdioxidmessfunktionalität bereitzustellen. Aufsatzvorrichtung 200i umfasst eine Kommunikationsschnittstelle zur drahtlosen Kommunikation mit einem externen Datengerät, wobei die Kommunikationsschnittstelle zur Übermittlung von Informationen an ein externes Datengerät oder von einem externen Datengerät eingerichtet ist. In dem dargestellten Ausführungsbeispiel der Aufsatzvorrichtung 200i ist die Kommunikationsschnittstelle als WLAN-Schnittstelle realisiert. Aufsatzvorrichtung 200j ist dazu eingerichtet, in an dem Laserentfernungsmessgerät 100 angeordnetem Zustand eine Feuchtigkeitsmessfunktionalität bereitzustellen. Aufsatzvorrichtung 200k weist eine Lichtquelle in Form mehrerer LEDs 204 auf, sodass das Laserentfernungsmessgerät 100 somit als Taschenlampe verwendet werden kann. Aufsatzvorrichtung 200l ist dazu eingerichtet, in an dem Laserentfernungsmessgerät 100 angeordnetem Zustand eine Luftdruckmessfunktionalität, insbesondere zur Messung eines Reifenluftdrucks, bereitzustellen. Aufsatzvorrichtung 200m ist dazu eingerichtet, in an dem Laserentfernungsmessgerät 100 angeordnetem Zustand eine Profiltiefenmessfunktionalität bereitzustellen.

Unter Verwendung der diversen Aufsatzvorrichtungen 200 (hier insbesondere 200a-200m) kann eine breite Palette an Zusatzfunktionalität für das Laserentfernungsmessgerät 100 bereitgestellt werden, die ohne die entsprechenden Aufsatzvorrichtungen 200 nicht verfügbar wären.

Insbesondere können Aufsatzvorrichtungen 200 mit elektrischen Zusatzfunktionen, beispielsweise mit (hier nicht näher dargestellten) Sensoren, Motoren, Dioden oder dergleichen, genutzt werden, wobei die Energieversorgung der entsprechenden Aufsatzvorrichtungen 200 vorteilhaft unter Verwendung der Energieversorgungsvorrichtung des Laserentfernungsmessgeräts 100 bereitgestellt wird.

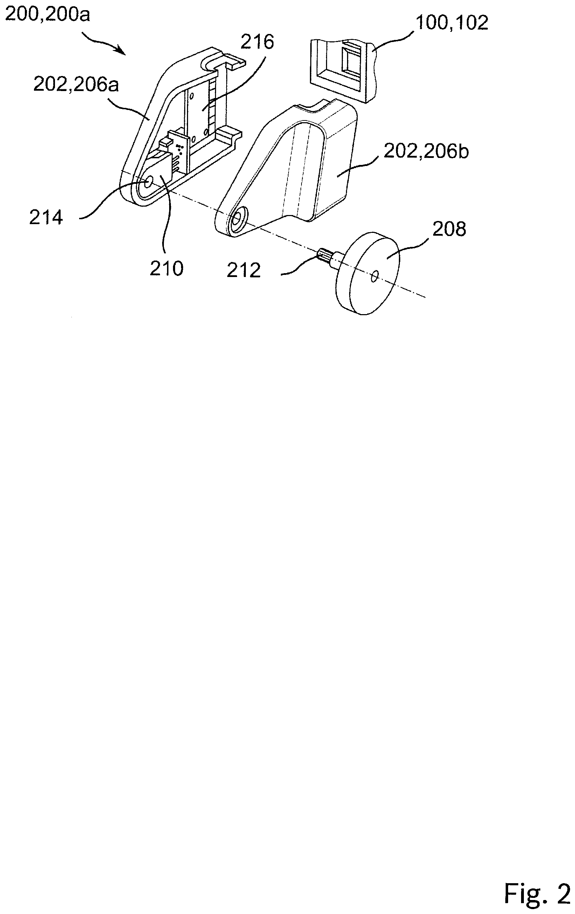

In Figur 2 zeigt in perspektivischer Darstellung eine exemplarische Aufsatzvorrichtung 200a, die eine Streckenmessfunktionalität bereitstellt. Dazu weist die Aufsatzvorrichtung 200a ein in dem Aufsatzgehäuse 202a (hier als aus zwei Halbschalen 206a,206b zusammengesetztes Aufsatzgehäuse 202a) gelagertes Rad 208 zur Positionsbestimmung auf. Dieses Rad 208 detektiert eine Bewegung der Aufsatzvorrichtung 200a bezogen auf eine (nicht näher dargestellte) Oberfläche, über die die Aufsatzvorrichtung 200a mittels des Rades 208 bewegt bzw. gerollt wird. Dabei kann die Länge des mit der Aufsatzvorrichtung 200a überstrichenen Streckenabschnitts unter Verwendung eines Sensors 210, der eine Drehung des Rads 208 detektiert, elektronisch erfasst werden. Das Rad 208 ist dazu über eine Radachse 212 in einer Aufnahme 214 des Sensors 210 drehbar gelagert. Der Sensor 210 weist eine eigene Steuereinheit 216 auf, die - abgesehen von einer Energieversorgungsvorrichtung - alle zum Betrieb des Sensors 210 nötigen Mittel umfasst. Ein von dem Sensor 210, insbesondere von der Steuereinheit 216, ausgegebenes Messsignal umfasst somit eine Dateninformation, die eine unter Bewegung des Rads 208 zurückgelegte Strecke charakterisiert. In an dem Laserentfernungsmessgerät 100 angeordneten Zustand kann diese Dateninformation an das Laserentfernungsmessgerät 100 ausgegeben werden, wobei die Dateninformation von der Steuervorrichtung des Laserentfernungsmessgeräts 100 weiterverarbeitet werden kann. Insbesondere kann die Dateninformation, beispielsweise ein Streckenmesswert, einem Bediener des Laserentfernungsmessgeräts 100 unter Verwendung der Ausgabevorrichtung 104 ausgeben werden. Derart kann das Laserentfernungsmessgerät 100 unter Verwendung der Aufsatzvorrichtung 200a zur einfachen Ermittlung von Längen undefinierter Strecken auf Oberflächen verwendet werden, die nicht notwendigerweise durch eine Gerade verbindbar sind (gekrümmte Oberfläche oder dergleichen).

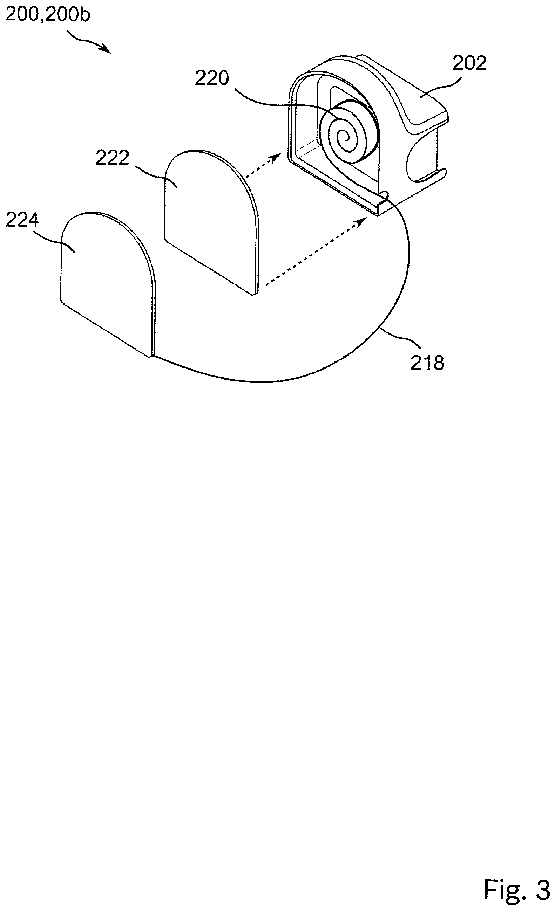

In Figur 3 ist eine weitere, exemplarische Aufsatzvorrichtung 200b gezeigt, die eine Maßbandfunktionalität bereitstellt. Dazu weist die Aufsatzvorrichtung 200b ein aus dem Aufsatzgehäuse 202b herausziehbares Band 218 auf. Dieses Band 218 kann vorteilhaft auf einer selbstrückstellenden Rolle 220 in dem Aufsatzgehäuse 202b gelagert und geführt sein. Das Aufsatzgehäuse 202b ist dabei von einem Gehäusedeckel 222 verschlossen. An dem aus dem Aufsatzgehäuse 202b herausziehbaren Band 218 ist eine Halteplatte 224 befestigt, mittels der das Band 218 bequem von einem Bediener des Laserentfernungsmessgeräts 100 gegriffen und herausgezogen werden kann. Die Länge des aus dem Aufsatzgehäuse 202b herausgezogenen Bandes 218 ist unter Verwendung eines (nicht näher dargestellten) Sensors elektronisch erfassbar. Der Sensor weist dabei ebenfalls eine eigene (nicht näher dargestellte) Steuereinheit auf, die - abgesehen von einer Energieversorgungsvorrichtung - alle zum Betrieb des Sensors nötigen Mittel umfasst. Ein von dem Sensor, insbesondere von der Steuereinheit des Sensors, ausgegebenes Messsignal umfasst somit eine Dateninformation, die eine Länge des herausgezogenen Maßbandes charakterisiert. In an dem Laserentfernungsmessgerät 100 angeordneten Zustand kann diese Dateninformation an das Laserentfernungsmessgerät 100 ausgegeben werden, wobei die Dateninformation von der Steuervorrichtung des Laserentfernungsmessgeräts 100 weiterverarbeitet werden kann. Insbesondere kann die Dateninformation, beispielsweise ein Längenmesswert, einem Bediener des Laserentfernungsmessgeräts 100 unter Verwendung der Ausgabevorrichtung 104 ausgeben werden. Derart kann das Laserentfernungsmessgerät 100 unter Verwendung der Aufsatzvorrichtung 200b zur einfachen Ermittlung von Längen undefinierter Strecken auf Oberflächen verwendet werden, die nicht notwendigerweise durch eine Gerade verbindbar sind (gekrümmte Oberfläche oder dergleichen).

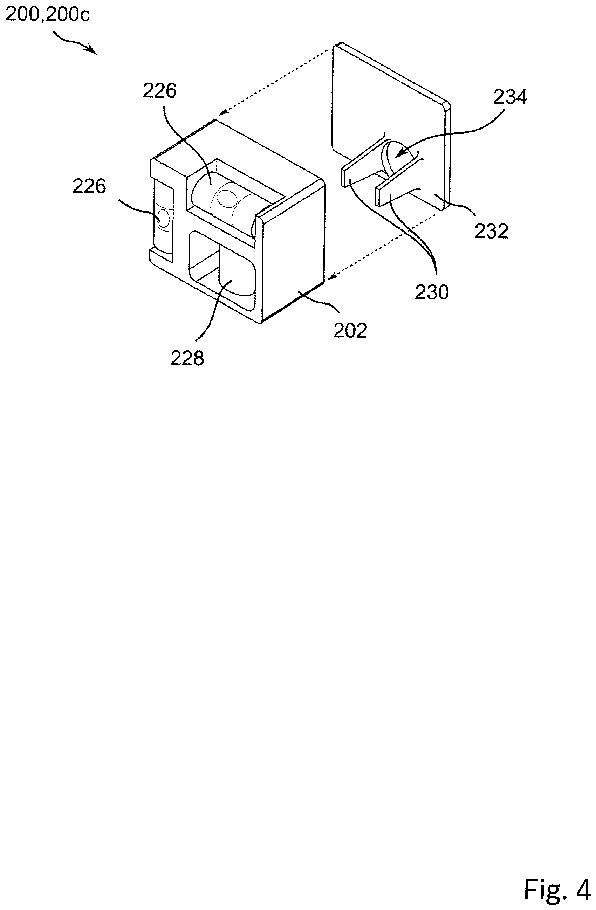

In Figur 4 ist eine weitere, exemplarische Aufsatzvorrichtung 200c gezeigt, die eine Nivellierfunktionalität bereitstellt. Dazu weist die Aufsatzvorrichtung 200c ein Aufsatzgehäuse 202c auf, in dem zwei Libellen 226 (Wasserwaagen) gehalten sind.

Ferner weist das Aufsatzgehäuse 202c eine Zylinderlinse 228 auf, die dazu vorgesehen ist, einen vom Laserentfernungsmessgerät 100 emittierten Laserstrahl 108 in einen Laserfächer aufzufächern und in eine auf einen entfernten Gegenstand projizierbare Laserlinie umzuwandeln. Die Zylinderlinse 228 wird ebenfalls in dem Aufsatzgehäuse 202c durch zwei Stege 230, die von einem Deckel 232 des Aufsatzgehäuses 202c hervorstehen, ortsfest im Strahlprofil des emittierbaren Laserstrahls 108 gehalten, der durch eine Öffnung 234 des Aufsatzgehäuses 202c, insbesondere des Deckels 232 des Aufsatzgehäuses 202c, auf die Zylinderlinse 228 einfällt. Derart kann das Laserentfernungsmessgerät 100 unter Verwendung der Libellen 226 zunächst vorteilhaft ausgerichtet werden und anschließend oder gleichzeitig ein von dem Laserentfernungsmessgerät 100 emittierter Laserstrahl 108 durch die Zylinderlinse 228 aufgefächert und auf einen entfernten Gegenstand zur Erzeugung einer Laserlinie projiziert werden. Dieses Ausführungsbeispiel weist demnach keine weiteren Sensoren auf und benötigt ferner keine Steuereinheit und keine Energieversorgung. Ferner wird auch keine Dateninformation an das Laserentfernungsmessgerät 100 ausgegeben.

Die Steuervorrichtung des handgehaltenen Laserentfernungsmessgeräts 100 ist dazu eingerichtet, einen angeordneten Zustand einer Aufsatzvorrichtung 200 sowie einen Typ (gemäß Figur 1 entsprechend der Indices a-m) einer angeordneten Aufsatzvorrichtung 200 zu erfassen. Die Erfassung des angeordneten Zustands einer Aufsatzvorrichtung 200 sowie eines Typs einer angeordneten Aufsatzvorrichtung 200 erfolgt in dem dargestellten Ausführungsbeispiel unter Verwendung einer elektrischen Kennung (nicht näher dargestellt) in Form eines in jeder Aufsatzvorrichtung 200 integrierten Kodierwiderstands. Das Laserentfernungsmessgerät 100 weist dazu eine hier nicht näher dargestellte Ausleseschaltung auf, mittels der sich der jeweilige Widerstandswert des Kodierwiderstands auslesen lässt. Der Widerstandswert dient dabei als eindeutiger Indikator für einen Typ einer jeweils angeordneten Aufsatzvorrichtung 200a-m. Die Ausleseschaltung generiert ein Signal über die Erfassung des angeordneten Zustands und des Typs der angeordneten Aufsatzvorrichtung 200, das an die Steuervorrichtung des Laserentfernungsmessgeräts 100 weitergeleitet und von dieser weiterverarbeitet wird. In Abhängigkeit des Erfassens einer angeordneten Aufsatzvorrichtung 200 und/oder in Abhängigkeit des Erfassens eines Typs einer angeordneten Aufsatzvorrichtung 200 kann die Steuervorrichtung eine Funktion ausführen und einen Betriebszustand ändern.

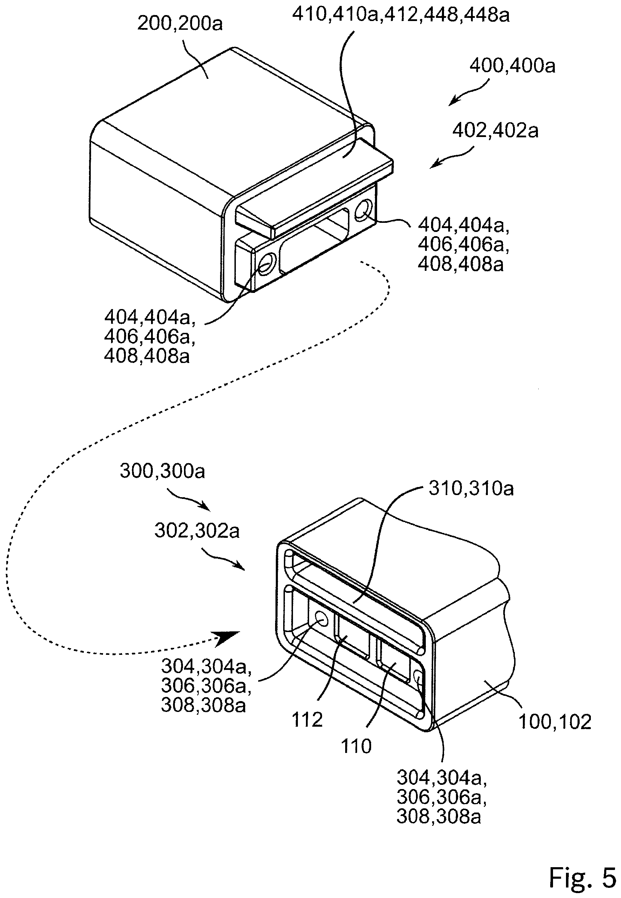

Beispielsweise ist die Steuervorrichtung dazu vorgesehen, bei Anordnung einer Aufsatzvorrichtung 200b, die eine Maßbandfunktionalität bereitstellt, die Emission der Laserstrahlung 108 zu unterbinden. Ferner ist die Steuervorrichtung dazu vorgesehen, eine Energieversorgung einer geräteseitigen elektrischen Koppelvorrichtung (vgl. insbesondere Figur 5), insbesondere eine Energieversorgung der am Laserentfernungsmessgerät 100 angeordneten Aufsatzvorrichtung 200, zu steuern oder zu regeln, insbesondere zu aktivieren oder zu deaktivieren.

Ferner ist die Steuervorrichtung dazu vorgesehen, einen von dem Sensor, insbesondere von der Steuereinheit des Sensors, der Aufsatzvorrichtung 200 ausgegebenes Messsignal, insbesondere eine Dateninformation weiterzuverarbeiten und unter Verwendung der Ausgabevorrichtung 104 auszugeben. Im Falle der Aufsatzvorrichtung 200b beispielsweise kann diese Dateninformation einen Längenmesswert darstellen. In diesem Sinne ist die Steuervorrichtung dazu vorgesehen, für jede spezifische Aufsatzvorrichtung 200a-m eine spezifische Funktionalität, insbesondere Regel- und/oder Steuerroutinen, bereitzustellen.

Wie in den folgenden Figuren anhand exemplarischer Ausführungsbeispiele gezeigt ist, weist jede der Aufsatzvorrichtungen 200 erfindungsgemäß dem jeweiligen Aufsatzgehäuse 202 zugeordnet eine aufsatzseitige Koppelvorrichtung 400 auf, die zur reversiblen Anordnung der Aufsatzvorrichtung 200 an dem Laserentfernungsmessgerät 100 eingerichtet ist. Wie ebenfalls in den folgenden Figuren gezeigt ist, weist entsprechend das Laserentfernungsmessgerät 100 dem Gerätegehäuse 102 zugeordnet eine geräteseitige Koppelvorrichtung 300 auf, die zur reversiblen Anordnung einer jeden Aufsatzvorrichtung 200 des Systems 10 an dem Laserentfernungsmessgerät 100 eingerichtet ist. Die geräteseitige Koppelvorrichtung 300 des Laserentfernungsmessgeräts 100 und die aufsatzseitige Koppelvorrichtung 400 der Aufsatzvorrichtung 200 sind derart korrespondierend oder komplementär ausgestaltet, dass sie zur reversiblen Anordnung der Aufsatzvorrichtung 200 an dem Laserentfernungsmessgerät 100 vorteilhaft zusammenwirken. Die (geräteseitige und aufsatzseitige) Koppelvorrichtungen 300,400 bewirken eine werkzeuglos lösbare Anbindung der Aufsatzvorrichtung 200 an dem Laserentfernungsmessgerät 100. Die Koppelvorrichtungen 300,400 ermöglichen ferner eine einfache Anordnung oder einen einfachen Tausch unterschiedlicher Aufsatzvorrichtungen 200, die je nach Bedarf und Situation von einem Bediener des Systems 10 gewählt werden können, an dem Laserentfernungsmessgerät 100.

Es sei angemerkt, dass in den folgenden Figuren 5 bis 10 jeweils nur die Koppelvorrichtungen 300,400, insbesondere deren Koppelschnittstellen 302,402, diskutiert werden. Die Koppelschnittstellen 302,402 dienen der mechanischen Anbindung der mit der Koppelschnittstelle verbundenen Aufsatzvorrichtung 200, die in den Figuren 5 bis 10 jedoch nicht weiter ausgeführt ist (auch zeichnerisch nicht weiter ausgeführt ist).

Die geräteseitige Koppelvorrichtung 300a untergliedert sich in dem in Figur 5 gezeigten Ausführungsbeispiel in eine geräteseitige Koppelschnittstelle 302a zu einer mechanischen Anbindung der Aufsatzvorrichtung 200 an dem Gerätegehäuse 102 des Laserentfernungsmessgeräts 100, eine geräteseitige Energieschnittstelle 304a zu einer energetischen Anbindung der Aufsatzvorrichtung 200 an das Laserentfernungsmessgerät 100, insbesondere an die Steuervorrichtung und an die Energieversorgungsvorrichtung des Laserentfernungsmessgeräts 100, und eine geräteseitige Datenkommunikationsschnittstelle (nicht näher dargestellt) zu einer informationsübertragenden Anbindung der Aufsatzvorrichtung 200 an das Laserentfernungsmessgerät 100, insbesondere an die Steuervorrichtung und an die Ausgabevorrichtung 104 des Laserentfernungsmessgeräts 100. Entsprechend untergliedert sich auch die aufsatzseitige Koppelvorrichtung 400a in eine aufsatzseitige Koppelschnittstelle 402a zu einer mechanischen Anbindung der Aufsatzvorrichtung 200 an dem Gerätegehäuse 102 des Laserentfernungsmessgeräts 100 und eine aufsatzseitige Energieschnittstelle 404a zu einer energetischen Anbindung der Aufsatzvorrichtung 200 an das Laserentfernungsmessgerät 100, insbesondere an die Steuervorrichtung und an die Energieversorgungsvorrichtung des Laserentfernungsmessgeräts 100, und eine aufsatzseitige Datenkommunikationsschnittstelle (nicht näher dargestellt) zu einer informationsübertragenden Anbindung der Aufsatzvorrichtung 200 an das Laserentfernungsmessgerät 100, insbesondere an die Steuervorrichtung und an die Ausgabevorrichtung 104 des Laserentfernungsmessgeräts 100.

Die Energieschnittstelle 304a,404a ist in Form einer elektrischen Schnittstelle 306a,406a realisiert, die dazu ausgebildet ist, eine elektrische Anbindung der Aufsatzvorrichtung 200 an das Laserentfernungsmessgerät 100, insbesondere an dessen Energieversorgungsvorrichtung, zu bewirken. Die geräteseitige Energieschnittstelle 304a weist zwei Kontaktelemente 308a auf. Die aufsatzseitige Energieschnittstelle 404a weist ebenfalls zwei Kontaktelemente 408a auf. Die Kontaktelemente 308a,408a sind jeweils in Form von Kontaktflächen realisiert, die einander im Falle ordnungsgemäßer Anordnung der Aufsatzvorrichtung 200 an dem Laserentfernungsmessgerät 100 berühren und somit einen elektrischen Kontakt herstellen. Auf diese Weise kann die Energieversorgungsvorrichtung des Laserentfernungsmessgeräts 100 gleichzeitig der Energieversorgung der Aufsatzvorrichtung 200 dienen. Die Energieschnittstelle 304a,404a ist zu einer mit der mechanischen Anbindung gekoppelten energetischen Anbindung der Aufsatzvorrichtung 200 an dem Gerätegehäuse 102 des Laserentfernungsmessgeräts 100 eingerichtet.

Die Datenkommunikationsschnittstelle (hier nicht näher dargestellt, da kabellos) dient der informationsübertragenden Anbindung der Aufsatzvorrichtung 200 an das Laserentfernungsmessgerät 100, insbesondere an die Steuervorrichtung des Laserentfernungsmessgeräts 100. In den dargestellten Ausführungsbeispielen der Figuren 5 bis 10 ist die Datenkommunikationsschnittstelle jeweils als drahtlose Datenkommunikationsschnittstelle ausgeführt, mittels der die Aufsatzvorrichtung 200 Messergebnisse an das Laserentfernungsmessgerät 100 senden kann. Die Datenkommunikationsschnittstelle nutzt ein standardisiertes Kommunikationsprotokoll, hier ein Bluetooth- oder NFC-Protokoll, zur Übertragung von Dateninformationen. Insbesondere verbinden sich die geräteseitige Datenkommunikationsschnittstelle mit der aufsatzseitigen Datenkommunikationsschnittstelle automatisch, sobald eine Entfernung der Aufsatzvorrichtung 200 zu dem Laserentfernungsmessgerät 100 einen Wert von 50 cm, bevorzugt von 10 cm, unterschreitet. Mittels der Datenkommunikationsschnittstelle werden gemessene Dateninformationen, beispielsweise Strecken-, Temperatur-, Feuchtigkeitsmesswerte oder andere, von der jeweiligen verwendeten Aufsatzvorrichtung 200 abhängige und bereitgestellte Dateninformationen dem Laserentfernungsmessgerät 100, insbesondere an dessen Steuervorrichtung, übertragen. Die von der Steuervorrichtung empfangenen Dateninformationen werden bei Bedarf weiterverarbeitet, insbesondere durch Datenverarbeitung, Datenausgabe, Datenspeicherung oder dergleichen.

Die in Figur 5 dargestellte aufsatzseitige Koppelvorrichtung 400a weist als Koppelschnittstelle 402a ein Koppelelement 410a auf, das dazu eingerichtet ist, eine kraftschlüssige Kopplung mit der geräteseitigen Koppelschnittstelle 302a des Laserentfernungsmessgeräts 100 zu realisieren. Das Koppelement 410a ist als ein das Aufsatzgehäuse 202 überragender Vorsprung 412 realisiert, in dem ein hier nicht näher dargestellter Magnet untergebracht ist. Das Koppelement 410a überragt das Aufsatzgehäuse um 5 mm und weist eine quaderförmige Gestalt auf mit Kantenlängen von ca. 20 mm, ca. 7 mm sowie 5 mm. Die geräteseitige Koppelschnittstelle 302a weist entsprechend eine quaderförmige Vertiefung 310a auf, wobei die Ausmaße der Vertiefung 310a geringfügig größer sind als die des Koppelements 410a, sodass das Koppelement 410a im angeordneten Zustand der Aufsatzvorrichtung 200 an dem Laserentfernungsmessgerät 100 in der Vertiefung 310a verschwindet. Hinter der Vertiefung 310a, im Innern des Gerätegehäuses 102, verbirgt sich ebenfalls ein Magnet, der eine auf den Magnet des Koppelements 410a anziehende Wirkung ausübt. Die Magnete bewirken eine kraftschlüssige Kopplung der Koppelschnittstellen 302a,402a. In diesem Ausführungsbeispiel der Koppelvorrichtung 300a,400a sind keine mechanisch beweglichen Bauelemente vorhanden, sodass eine besonders kompakte, langlebige Koppelvorrichtung 300a,400a realisierbar ist. Die Koppelvorrichtung 300a,400a, insbesondere die aufsatzseitige Koppelschnittstelle 402a mit dem Koppelelement 410a, realisiert gleichzeitig zur kraftschlüssigen Anbindung der Aufsatzvorrichtung 200 an dem Laserentfernungsmessgerät 100 ferner eine axiale Sicherung, eine radiale Sicherung sowie eine Drehsicherung der Aufsatzvorrichtung 200 bezogen auf das Laserentfernungsmessgerät 100.

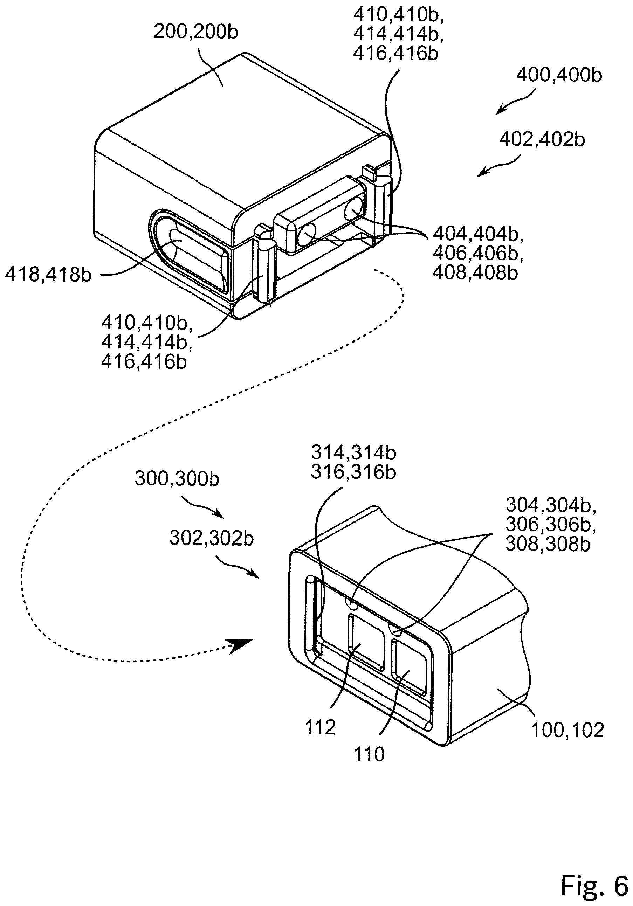

In Figur 6 ist eine alternative Ausgestaltung einer aufsatzseitigen Koppelschnittstelle 402b dargestellt, die ein Koppelelement 410b aufweist, das dazu eingerichtet ist, eine kraftschlüssige und formschlüssige Kopplung mit der geräteseitigen Koppelschnittstelle 302b des Laserentfernungsmessgeräts 100 zu realisieren. Die aufsatzseitige Koppelschnittstelle 402b ist dazu eingerichtet, bei Anordnung der Aufsatzvorrichtung 200 mit der geräteseitigen Koppelschnittstelle 302b einen Hinterschnitt zu bilden, insbesondere eine Rastverbindung zu bilden. Dabei ist die aufsatzseitige Koppelschnittstelle 402b der Aufsatzvorrichtung 200 als Form- und Kraftschlusselement 414b einer Rastverbindung in Form zweier auf gegenüberliegenden Seiten des Aufsatzgehäuses 202 angeordneter federnder Elemente, d.h. als Federrasten, realisiert und bildet somit elastische Rasthaken 416b. Entsprechend ist die geräteseitige Koppelschnittstelle 302b ebenfalls als korrespondierend ausgeformtes Form- und Kraftschlusselement 314b der Rastverbindung in Form zweier Ausnehmungen 316b realisiert. Die Rasthaken 416b greifen beim Ansetzen der Aufsatzvorrichtung 200 an das Gerätegehäuse 102 des Laserentfernungsmessgeräts 100 in die jeweils korrespondierend bzw. komplementär ausgeformten Ausnehmungen 316b rastend ein. Vorteilhaft kann die Rastverbindung zwischen Aufsatzvorrichtung 200 und Gerätegehäuse 102 des Laserentfernungsmessgeräts 100 automatisch, d.h. ohne sonstigen Handgriff oder Einwirkung eines sonstigen Hilfsmittels, wirksam werden. Die Koppelschnittstelle 302b,402b realisiert gleichzeitig zur form- und kraftschlüssigen Anbindung der Aufsatzvorrichtung 200 an dem Laserentfernungsmessgerät 100 ferner eine axiale Sicherung, eine radiale Sicherung sowie eine Drehsicherung der Aufsatzvorrichtung 200 bezogen auf das Laserentfernungsmessgerät 100. Zum Lösen der Rastverbindung sind die zwei federnd ausgeführten Rasthaken 416b von Hand entgegen der Federkraft betätigbar, um die Form- und Kraftschlusselemente 414b mit den korrespondierenden Ausnehmungen 316b an dem Gerätegehäuse 102 außer Eingriff zu bringen. Die beiden Form- und Kraftschlusselemente 414b in Form der Rasthaken 416b weisen zu diesem Zweck je eine Entriegelungstaste 418b als Entriegelungselement auf, ausgeformt als flächige Drucktaste, durch die der Bediener des Laserentfernungsmessgeräts 100 eine Entriegelung auslösen kann.

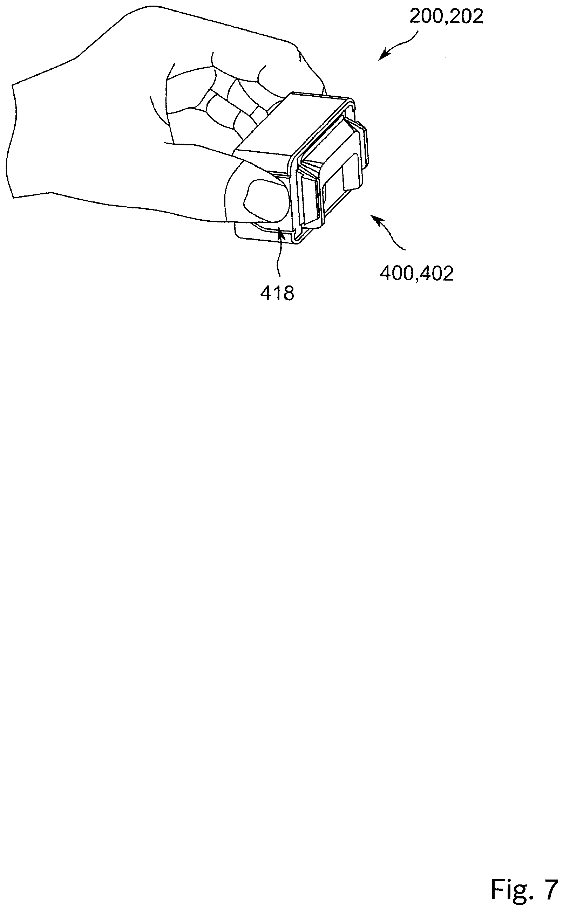

Eine schematische Darstellung, wie die Aufsatzvorrichtung 200, insbesondere die aufsatzseitige Koppelschnittstelle 402b, bei der Anordnung und/oder bei der Entriegelung von einer Hand eines Bedieners geführt und gehalten wird, ist in Figur 7 gezeigt.

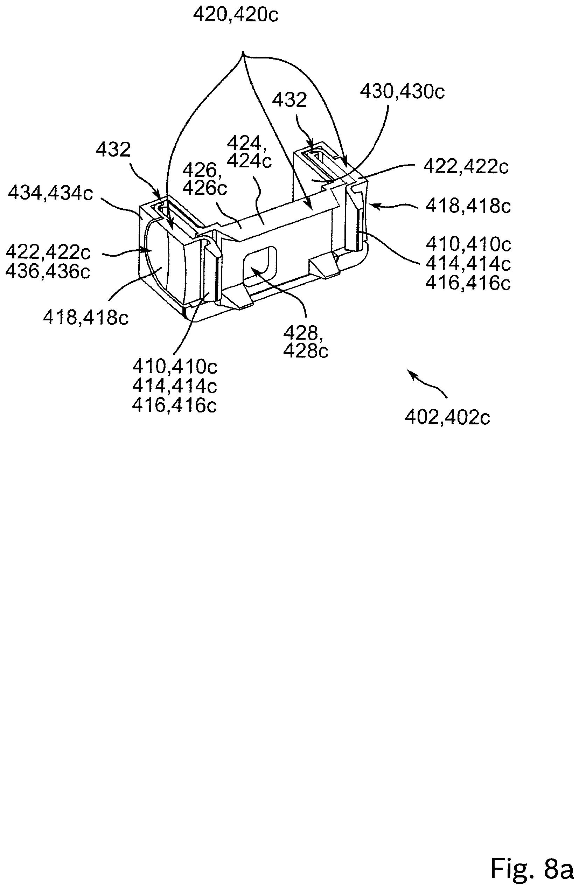

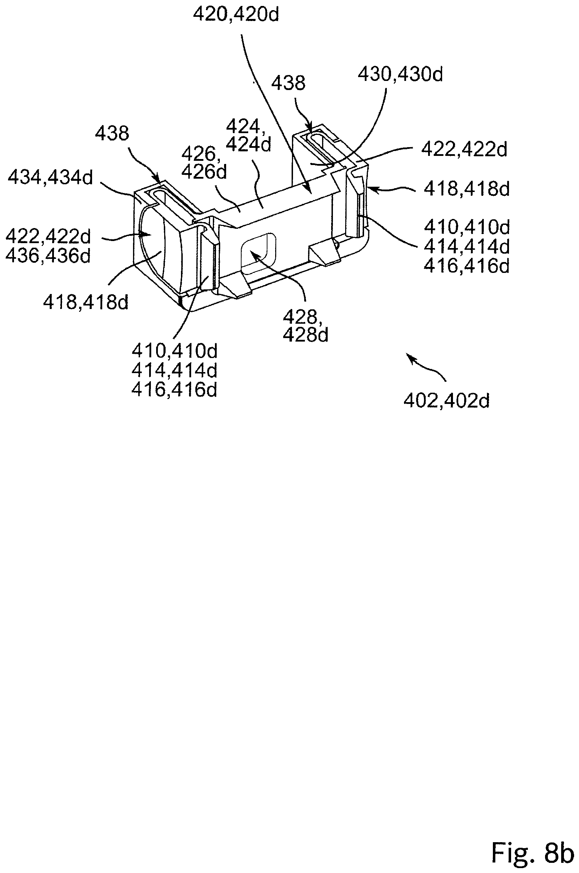

Figuren 8a und 8b zeigen jeweils in perspektivischer Ansicht einen Schnitt von zwei unterschiedlichen Ausführungsformen einer aufsatzseitigen Koppelschnittstelle 402c bzw. 402d. Die Ausführungsformen stellen Abwandlungen der in Figur 6 dargestellten Ausführungsform der aufsatzseitigen Koppelschnittstelle 402b dar.

In Figur 8a ist das die aufsatzseitige Koppelschnittstelle 402c bildende Bauteil 420c als ein dreiteiliges Bauteil 420c ausgeführt. Zwei Seitenteile 422c umfassen jeweils einen Rasthaken 416c, der mit einem Entriegelungselement in Form einer Entriegelungstaste 418c verbunden ist. Zwischen den zwei Seitenteile 422c ist ein Verbindungsstück 424c angeordnet. Das Verbindungsstück 424c weist dabei eine im Wesentlichen U-förmige Gestalt mit zwei Schenkeln 430c auf, wobei sich die Öffnung dieser U-Gestalt in Richtung der Aufsatzvorrichtung 200 und von der Koppelschnittstelle 402c weg erstreckt. Das U-förmige Verbindungsstück 424c bildet ferner eine ca. 1cm hohe, ca. 1 mm dicke Wandung 426c aus, die sich entlang der U-Form erstreckt. Die Wandung 426c weist eine Ausnehmung 428c auf, die dem Durchlass (oder Einlass in das Aufsatzgehäuse 202) von Laserstrahlung 108 dient, sofern die Aufsatzvorrichtung 200 an dem Laserentfernungsmessgerät 100 angeordnet ist und dieses Laserstrahlung 108 emittiert. Die Schenkel 430c des U-förmigen Verbindungsstücks 424c weisen an ihren Enden jeweils ein Widerlager 432 zur beweglichen Abstützung und Führung der daran verbindungslos ansetzenden Seitenteile 422c auf. Dabei verlaufen die Seitenteilte 422c jeweils entlang, insbesondere parallel entlang, eines Schenkels 430c des U-förmigen Verbindungsstücks 424c. Das dreiteilige Bauteil 420c wird in einem Schnittstellengehäuse 434c der aufsatzseitigen Koppelschnittstelle 402c aufgenommen, wobei das Schnittstellengehäuse 434c jeweils auf zwei gegenüberliegenden Seiten in dessen Oberfläche eine Ausnehmung 436c zur Aufnahme der Entriegelungstasten 418c aufweist, wobei die Entriegelungstasten 418c mit der jeweiligen Oberfläche des Schnittstellengehäuses 434c eine im Wesentlichen ebene (plane) Anordnung bilden.

In Figur 8b ist das die aufsatzseitige Koppelschnittstelle 402d bildende Bauteil 420d als ein einteiliges, insbesondere einstückiges, Bauteil 420d ausgeführt. Zwei Seitenteile 422d des Bauteils 420d umfassen jeweils einen Rasthaken 416d, der mit einem Entriegelungselement in Form einer Entriegelungstaste 418d verbunden ist. Zwischen den zwei Seitenteile 422d ist ein Verbindungsstück 424d angeordnet. Die Form des Verbindungsstücks 424d entspricht im Wesentlichen der Form des Verbindungsstücks 424c aus Figur 8a. Allerdings bilden die Schenkel 430d des U-förmigen Verbindungsstücks 424d keine Widerlager aus, sondern sind über eine U-förmige Verbindung 438 unmittelbar jeweils mit einem Ende eines einstückig ansetzenden Seitenteils 422d verbunden. Dabei verlaufen die Seitenteile 422d ebenfalls jeweils entlang, insbesondere parallel entlang, eines Schenkels 430d des U-förmigen Verbindungsstücks 424d. Das einteilige Bauteil 420d wird in einem Schnittstellengehäuse 434d der aufsatzseitigen Koppelschnittstelle 402d aufgenommen, wobei das Schnittstellengehäuse 434d ebenfalls jeweils auf zwei gegenüberliegenden Seiten in dessen Oberfläche eine Ausnehmung 436d zur Aufnahme der Entriegelungstasten 418d aufweist, wobei die Entriegelungstasten 418d mit der jeweiligen Oberfläche des Schnittstellengehäuses 434d eine im Wesentlichen ebene (plane) Anordnung bilden.

Figur 8c zeigt einen weiteren Schnitt der in Figur 8b dargestellten aufsatzseitigen Koppelschnittstelle 402d, insbesondere einer Aufsatzvorrichtung 200, angeordnet an einem Laserentfernungsmessgerät 100, insbesondere angeordnet an der geräteseitigen Koppelschnittstelle 302d unter Verwendung der aufsatzseitigen Koppelschnittstelle 402d. Insbesondere ist zu erkennen, dass das federnde Form- und Kraftschlusselement 414d, insbesondere der Rasthaken 416d, als ein mittels einer Blattfeder 440 federnd gelagerter Rasthaken 416d ausgeführt ist. Der Rasthaken 416d weist an seiner Spitze eine Auflaufschräge 442 auf, wobei die Auflaufschräge 442 des Rasthakens 416d mit einer korrespondierenden Auflaufschräge 342 an der geräteseitigen Koppelschnittstelle 302d derart zusammenwirkt, dass bereits beim Ansetzen der Aufsatzvorrichtung 200 an dem Gerätegehäuse 102d ohne weiteres Zutun der federnde Rasthaken 416d gespannt wird und in die Ausnehmung 316d einschnappt bzw. einrastet. Der Rasthaken 416d sowie ein über die Ausnehmung 316d geringfügig überstehendes Element 344 der geräteseitigen Koppelschnittstelle 302d bilden dabei einen Hinterschnitt 346d.

Ferner ist in Figur 8c zu erkennen, wie die für Laserstrahlung 108 durchlässige Ausnehmung 436d in dem Verbindungsstück 424d der aufsatzseitigen Koppelschnittstelle 402d mit der Sendeoptik 110, insbesondere einer Öffnung im Gerätegehäuse 102 des Laserentfernungsmessgeräts 100, derart zusammenfällt, dass von dem Laserentfernungsmessgerät 100 emittierte Laserstrahlung 108 durch die Ausnehmung 436d in das Aufsatzgehäuse 102 einfallen kann. Ferner ist in Figur 8c zu erkennen, dass die aufsatzseitige Koppelschnittstelle 402d eine Führung 444d, insbesondere eine leicht schräg verlaufende Führung 444d, aufweist, die eine spielfrei und präzise ausgerichtete Anordnung der Aufsatzvorrichtung 200 an dem Laserentfernungsmessgerät 100 bewirkt.

Figur 8d zeigt einen weiteren Schnitt der in Figur 8b dargestellten aufsatzseitigen Koppelschnittstelle 402d, insbesondere einer Aufsatzvorrichtung 200, angeordnet an einem Laserentfernungsmessgerät 100, insbesondere der geräteseitigen Koppelschnittstelle 302d unter Verwendung der aufsatzseitigen Koppelschnittstelle 402d. Der Schnitt liegt in dieser Ansicht orthogonal zu dem in Figur 8c dargestellten Schnitt. Insbesondere ist zu erkennen, wie die für Laserstrahlung 108 durchlässige Ausnehmung 436d in dem Verbindungsstück 424d der aufsatzseitigen Koppelschnittstelle 402d mit der Sendeoptik 110, insbesondere einer Öffnung im Gerätegehäuse 102 des Laserentfernungsmessgeräts 100, derart zusammenfällt, dass von dem Laserentfernungsmessgerät 100 emittierte Laserstrahlung 108 durch die Ausnehmung 436d in das Aufsatzgehäuse 102 einfallen kann. Ferner ist in Figur 8d zu erkennen, dass die aufsatzseitige Koppelschnittstelle 402d weitere Elemente zur Führung, insbesondere leicht schräg verlaufende Führungen 444d, aufweist, die eine spielfrei und präzise ausgerichtete Anordnung der Aufsatzvorrichtung 200 an dem Laserentfernungsmessgerät 100 bewirkt.

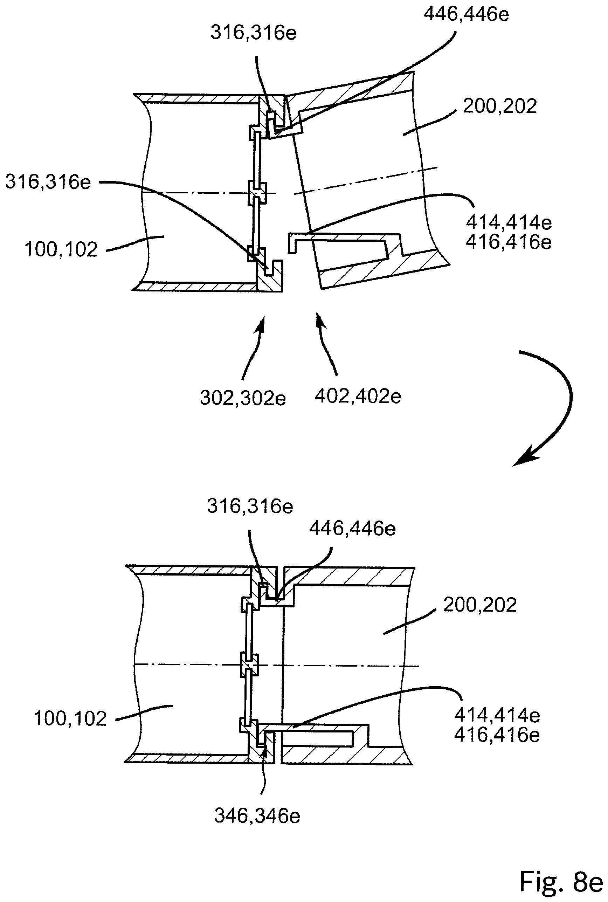

Die Figur 8e zeigt eine geringfügig abgewandelte Ausführungsform der in Figur 8b dargestellten aufsatzseitigen Koppelschnittstelle 402d in schematischer Weise. Während die in Figur 8b dargestellte aufsatzseitige Koppelschnittstelle 402d auf zwei gegenüberliegenden Seiten des Aufsatzgehäuses 202 je zwei Rasthaken 416d samt Entriegelungselementen in Form von Entriegelungstasten 418d aufweist, ist die in Figur 8e schematisch dargestellte Ausführungsform unter Verwendung lediglich eines Rasthakens 416e samt Entriegelungselement in Form einer Entriegelungstaste 418e realisiert. Auf der dem Rasthaken 416e gegenüberliegenden, zweiten Seite des Aufsatzgehäuses 202 befindet sich lediglich ein kleiner Haken 446e als Widerlager, sodass das Aufsatzgehäuse 202 beim Ansetzen an dem Gerätegehäuse 102 zunächst einseitig eingehakt wird und anschließend ohne weiteres Zutun mittels des federnden Rasthakens 416e gespannt wird und in eine geräteseitige Ausnehmung 316e einschnappt bzw. einrastet. Sowohl der einseitige Rasthaken 416e als auch der kleine Haken 446e bilden jeweils mit einer geräteseitigen Ausnehmung 316e einen Hinterschnitt 346e.

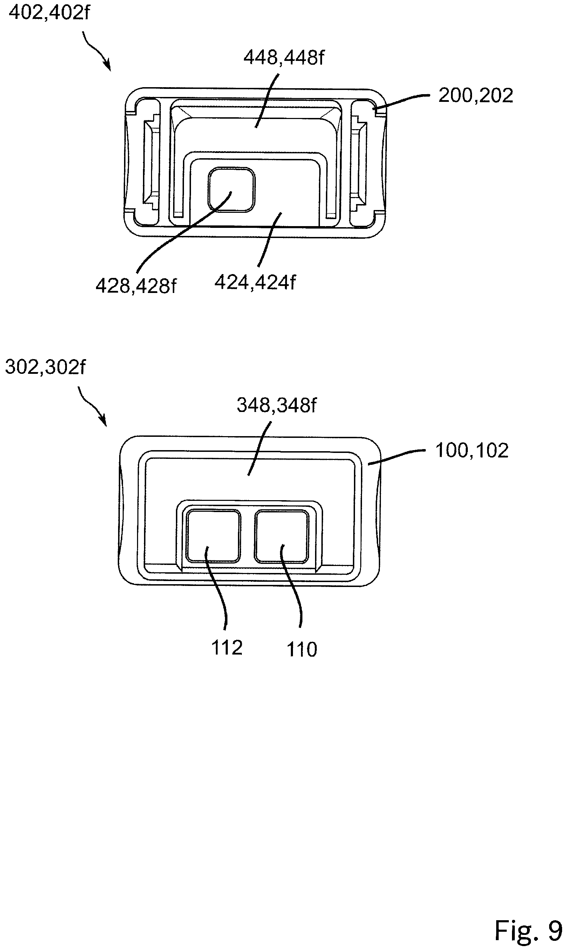

Figur 9 zeigt eine gegenüber den in Figuren 8a bis 8e dargestellten Ausführungsformen leicht abgewandelte aufsatzseitige Koppelschnittstelle 402f und eine entsprechend leicht abgewandelte geräteseitige Koppelschnittstelle 302f. Das Verbindungsstück 424f der aufsatzseitigen Koppelschnittstelle 402f (vgl. Ausführungen zu Figuren 8a und 8b) weist hier einen Verdrehschutz 448f in Form eines in der Papierebene im Wesentlichen U-förmigen, aus der Papierebene hervorstehenden Profils auf. Entsprechend weist die geräteseitige Koppelvorrichtung 302f eine in Form einer in der Papierebene im Wesentlichen U-förmigen, aus der Papierebene versinkenden Vertiefung 348f oder Ausnahme auf. Dieser Verdrehschutz 448f ermöglicht die Anordnung der Aufsatzvorrichtung 200 an dem Laserentfernungsmessgerät 100 lediglich in einer Vorzugsausrichtung, in der das hervorstehende Profil des Verdrehschutzes 448f der aufsatzseitigen Koppelschnittstelle 402f und die Vertiefung 348f der geräteseitigen Koppelschnittstelle 302f kongruent übereinander zu liegen kommen und somit das hervorstehende Profil in der Vertiefung 348f aufgenommen wird. Derart erlaubt diese bestimmte Formgebung der Koppelschnittstelle 302f,402f, Verdrehstellungen der Aufsatzvorrichtung 200 bezogen auf das Laserentfernungsmessgerät 100 auszuschließen. Insbesondere lässt sich die Aufsatzvorrichtung 200 nur in einer einzigen Position bzw. Ausrichtung an das Laserentfernungsmessgerät 100 anordnen.

Es sei an dieser Stelle angemerkt, dass auch das in der Figur 5 dargestellte Koppelement 410a als Verdrehschutz 448a wirkt, da es eine Anordnung der Aufsatzvorrichtung 200 an dem Laserentfernungsmessgerät 100 lediglich in einer definierten Ausrichtung erlauben.

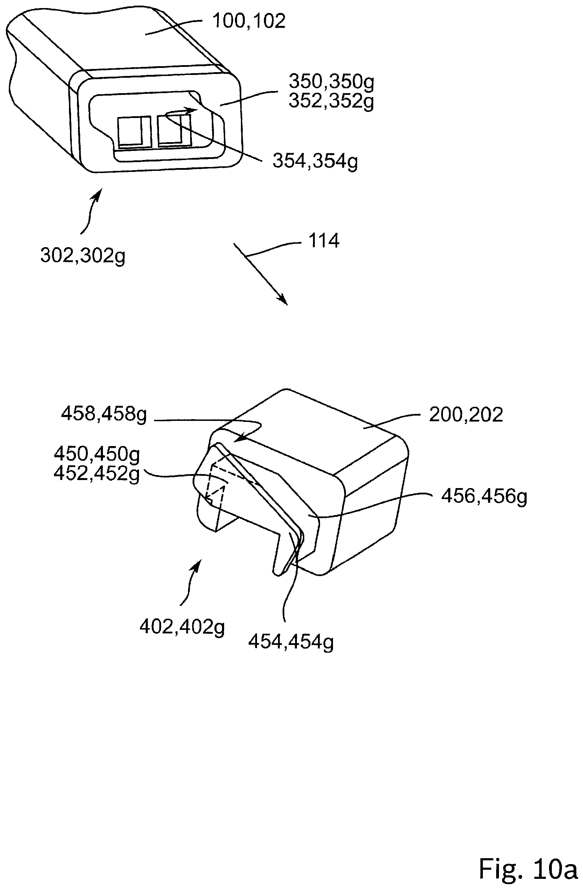

Die Figuren 10a bis 10h zeigen weitere, alternative Ausführungsformen der aufsatzseitigen Koppelschnittstelle 402 und der geräteseitigen Koppelschnittstelle 302.

In den Ausführungsformen der Figuren 10a bis 10c sind die aufsatzseitige Koppelschnittstelle 402g,402h,402i und die geräteseitige Koppelschnittstelle 302g,302h,302i jeweils als korrespondierend ausgeführte Formschlusselemente 452g bzw. 352g einer Bajonett-Verbindung realisiert.

In Figur 10a umfasst die geräteseitige Koppelschnittstelle 302g einen Flansch 350g bzw. einen Flanschring, während die aufsatzseitige Koppelschnittstelle 402g eine Befestigungsplatte 450g umfasst. Der Flansch 302g weist eine Hinterschneidung 354g auf, die sich in Umfangsrichtung des Flansches 302g erstreckt, wobei bei der Herstellung der Bajonett-Verbindung wenigstens ein korrespondierendes Hintergreifungselement 454g der aufsatzseitigen Koppelschnittstelle 402g nach Art einer Bajonett-Verbindung in die Hinterschneidung 354g eingreift. Die Anordnung der Aufsatzvorrichtung 200 an dem Laserentfernungsmessgerät 100 erfolgt dabei durch ein Verdrehen des Hintergreifungselement 354g gegenüber dem Flansch 350g, sodass ein Hinterschnitt von Hintergreifungselement 454g und Hinterschneidung 354g des Flanschs 350g gebildet wird. Das Hintergreifungselement 454g der Ausführungsform in Figur 10a ist in Form einer durchgängigen Platte 450g realisiert, die derart an dem Aufsatzgehäuse 202 (hier mittels eines Abstandsockels 456g) ausgeformt ist, dass eine die Platte 456 zumindest teilweise umlaufende Hinterschneidung 458g resultiert.

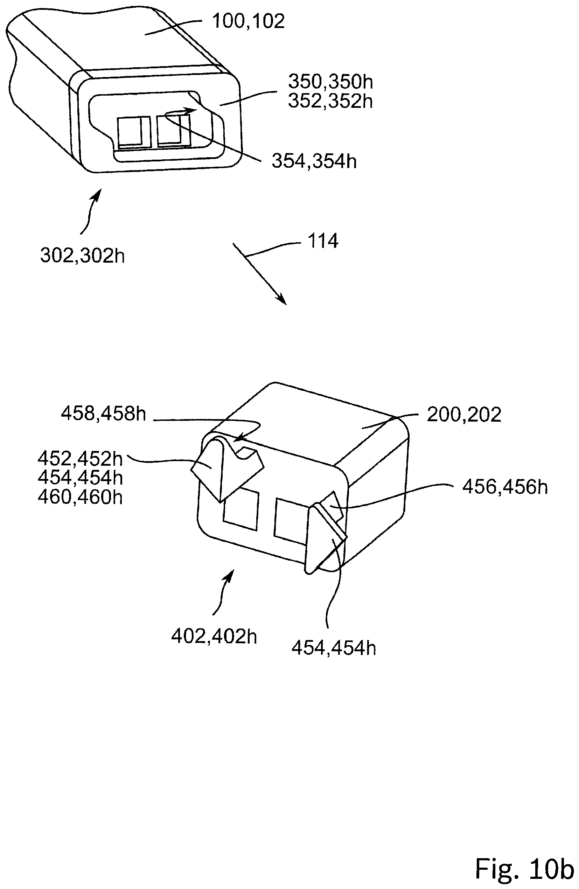

In Figur 10b ist das Hintergreifungselement 454h nicht in Form einer durchgängigen Platte realisiert, sondern in Form zweier einzelner Hintergreifungselemente 460h, die ebenfalls jeweils derart an dem Aufsatzgehäuse 202 (hier mittels jeweils eines Abstandsockels 456h) ausgeformt sind, dass eine zumindest seitliche Hinterschneidung 458h resultiert.

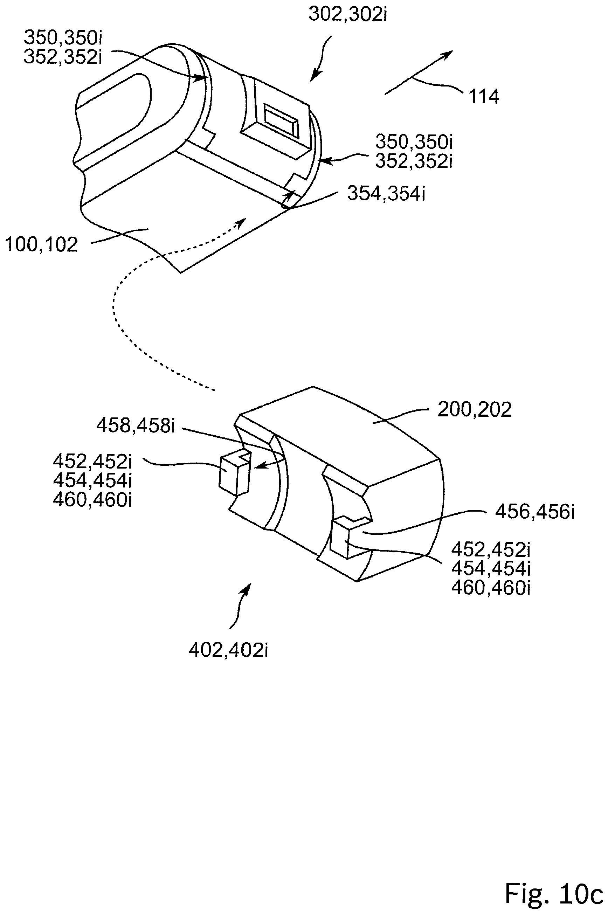

In Figur 10c umfasst die geräteseitige Koppelschnittstelle 302i zwei geradlinig ausgeformte Flansche 350i, während die aufsatzseitige Koppelschnittstelle 402i zwei korrespondierend ausgeformte Hintergreifungselemente 460i aufweist. Die zwei geradlinigen Flansche 350i weisen jeweils eine geradlinig ausgeformte Hinterschneidung 354i in Form zweier Schienen auf, wobei bei der Herstellung der Bajonett-Verbindung die zwei Hintergreifungselemente 460i der aufsatzseitigen Koppelschnittstelle 302i nach Art einer Bajonett-Verbindung in die geradlinigen Hinterschneidungen 354i, insbesondere in die Schienen, eingeführt werden und somit die hinter die Hinterschneidung 354i eingreifen. Die Hintergreifungselemente 460i der Ausführungsform in Figur 10c sind derart an dem Aufsatzgehäuse 202 (hier mittels jeweils eines Abstandsockels 456i) ausgeformt, dass eine zumindest seitliche Hinterschneidung 458i resultiert.

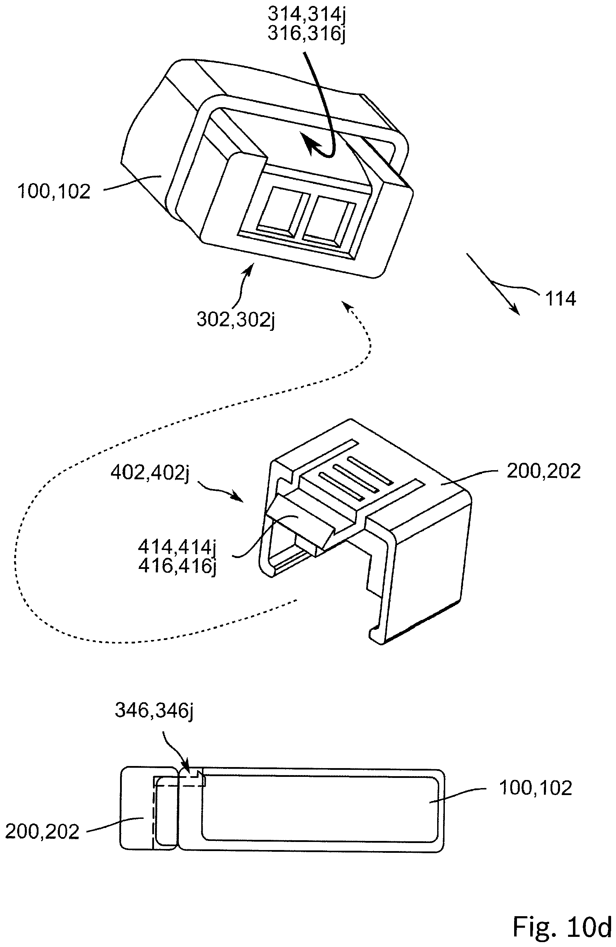

In der Ausführungsform der Figur 10d ist die geräteseitige Koppelschnittstelle 302j und die aufsatzseitige Koppelschnittstelle 302j als korrespondierend ausgeführtes Element einer kraftschlüssigen und formschlüssigen Rastverbindung ausgeführt. Dabei ist die aufsatzseitige Koppelschnittstelle 402j dazu eingerichtet, bei Anordnung der Aufsatzvorrichtung 200 mit der geräteseitigen Koppelschnittstelle 302j einen Hinterschnitt 346j in Form einer Rastverbindung zu bilden. Dabei ist die aufsatzseitige Koppelschnittstelle 402j der Aufsatzvorrichtung 200 als Form- und Kraftschlusselement 414j einer Rastverbindung in Form eines einseitig an dem Aufsatzgehäuse 202 angeordneten, federnd ausgeführten Elements realisiert und bildet somit einen elastischen Rasthaken 416j. Entsprechend ist die geräteseitige Koppelschnittstelle 302j als zu diesem Rasthaken 416j korrespondierendes Formund Kraftschlusselement 314j der Rastverbindung in Form einer Ausnehmungen 316j ausgeformt. Der Rasthaken 416j greift beim Ansetzen der Aufsatzvorrichtung 200 an das Gerätegehäuse 102 des Laserentfernungsmessgeräts 100 in die korrespondierend ausgeformt Ausnehmungen 316j rastend ein.

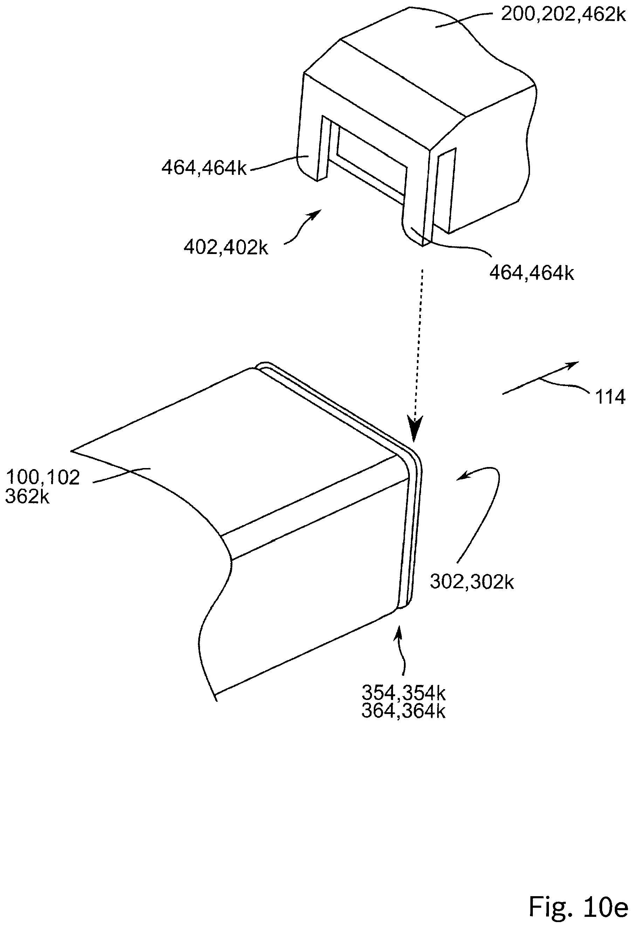

In den Ausführungsformen der Figuren 10e bis 10g sind die geräteseitige Koppelschnittstelle 302k,302l,302m und die aufsatzseitige Koppelschnittstelle 402k,402l,402m als korrespondierend ausgeführte Elemente einer zumindest formschlüssigen Steckverbindung ausgeführt. Dabei ist die aufsatzseitige Koppelschnittstelle 402k,402l,402m jeweils dazu eingerichtet, bei Anordnung der Aufsatzvorrichtung 200 mit der geräteseitigen Koppelschnittstelle 302k,302l,302m einen Hinterschnitt in Form einer Steckverbindung zu bilden, die eine formschlüssige Anbindung der Aufsatzvorrichtung 200 an dem Laserentfernungsmessgerät 100 bewirkt. Die aufsatzseitige Koppelschnittstelle 402k,402l,402m und die geräteseitigen Koppelschnittstelle 302k,302l,302m stellen dabei für einen Formschluss passend ausgeformte Steckteile 362k,362l,362m,462k,462l,462m dar. Der Formschluss der Steckverbindung wirkt bevorzugt zumindest in Entfernungsmessrichtung 114. Ferner können die aufsatzseitige Koppelschnittstelle 402k,402l,402m und die geräteseitigen Koppelschnittstelle 302k,302l,302m beispielsweise durch Federkraft kraftschlüssig lösbar fixiert werden und/oder durch Verschrauben zusätzlich gegen unbeabsichtigtes Lösen gesichert werden.

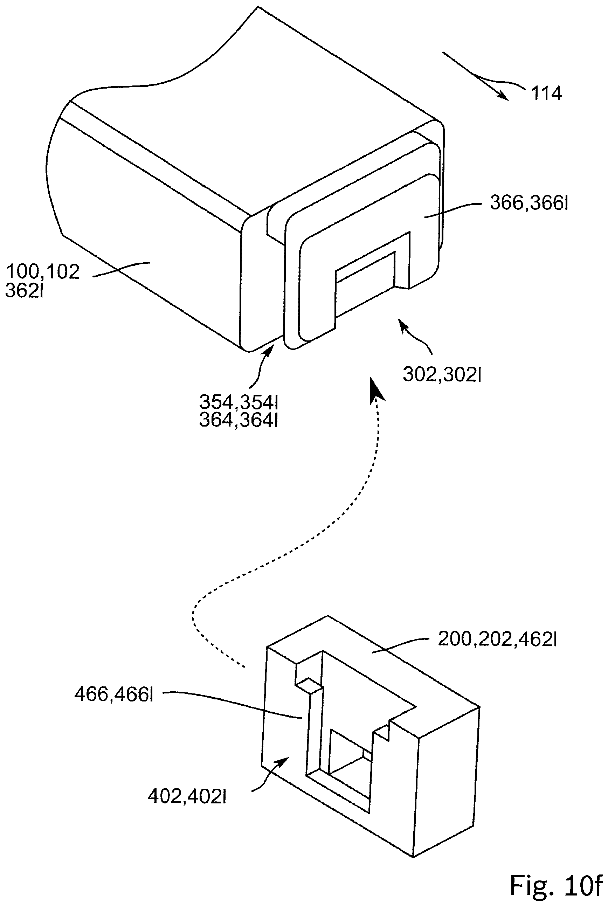

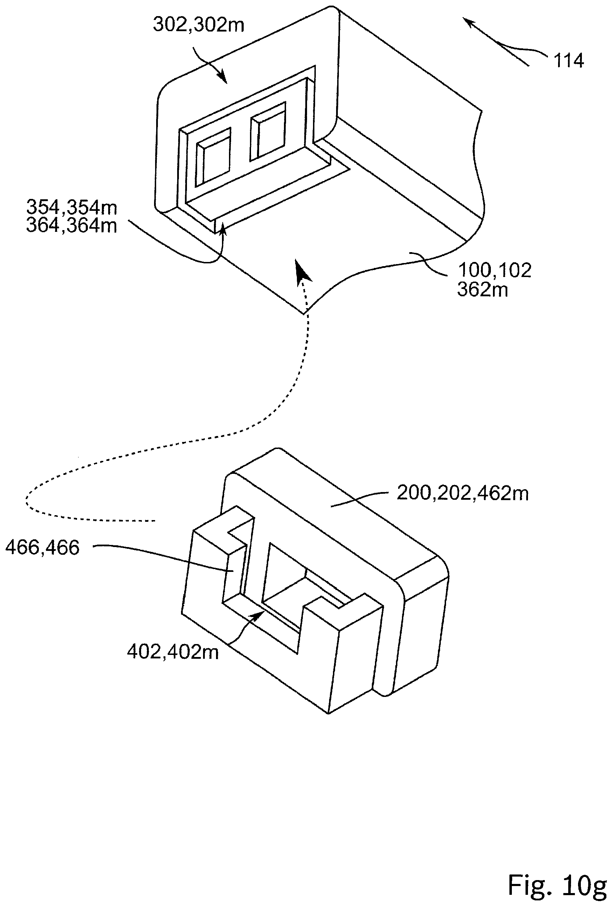

In Figur 10e ist die Aufsatzvorrichtung 200 in Richtung senkrecht zur Entfernungsmessrichtung 114 auf das Gerätegehäuse 102 ansteckbar. Dabei greifen zwei von dem Aufsatzgehäuse 202 beabstandet ausgebildete Lamellen 464k der aufsatzseitigen Koppelschnittstelle 402k in jeweils eine in dem Gerätegehäuse 102 des Laserentfernungsmessgeräts 100 ausgebildete Führungsschiene 364k der geräteseitigen Koppelschnittstelle 302k. Wie in Figur 10f gezeigt, können die Lamellen 464l alternativ auch als mit der Aufsatzvorrichtung 200 verbundene Umgreifungen 466l ausgeführt sein, die beim Anordnen der Aufsatzvorrichtung 200 in jeweils eine in dem Gerätegehäuse 102 des Laserentfernungsmessgeräts 100 ausgebildete Führungsschiene 364l der geräteseitigen Koppelschnittstelle 302l eingreifen, diese insbesondere seitlich umgreifen. Während in Figur 10f die geräteseitig ausgeführten Führungsschienen 364l in einem von dem Gerätegehäuse 102 hervorstehendem Gehäuseblock 366l vorgesehen sind, sind in Figur 10g die geräteseitig ausgeführten Führungsschienen als in die Gesamtkontur des Gerätegehäuses 102 eingelassene Führungsschienen 364m realisiert.

In den gezeigten Ausführungsform der Figuren 5 bis 10 sind die geräteseitige Koppelschnittstelle 302 sowie die aufsatzseitige Koppelschnittstelle 402, ferner das Gerätegehäuse 102 und das Aufsatzgehäuse 202, derart aufeinander abgestimmt, dass die Aufsatzvorrichtung 200 eine Gehäuseform des Laserentfernungsmessgeräts 100, insbesondere dessen Außenkontur, fortsetzt.

## Patentansprüche

1. Handgehaltenes Laserentfernungsmessgerät (100) zur berührungslosen Entfernungsmessung zwischen dem Laserentfernungsmessgerät (100) und einem entfernten Gegenstand unter Verwendung eines von dem Laserentfernungsmessgerät (100) emittierbaren Laserstrahls (108), mit einem Gerätegehäuse (102) und einer Energieversorgungsvorrichtung, wobei das Laserentfernungsmessgerät (100) dem Gerätegehäuse (102) zugeordnet eine geräteseitige Koppelvorrichtung (300) aufweist, die zur reversiblen Anordnung zumindest einer Aufsatzvorrichtung (200) an dem Laserentfernungsmessgerät (100) eingerichtet ist, wobei durch die Anordnung der Aufsatzvorrichtung (200) an dem Laserentfernungsmessgerät (100) zumindest eine Zusatzfunktionalität bereitstellbar ist, **dadurch gekennzeichnet, dass** die geräteseitige Koppelvorrichtung (300) zur Übertragung einer elektrischen Energie an eine elektrische Energienutzungseinheit einer an dem Laserentfernungsmessgerät (100) angeordneten Aufsatzvorrichtung (200) eingerichtet ist.

2. Handgehaltenes Laserentfernungsmessgerät (100) nach Anspruch 1, **dadurch gekennzeichnet, dass** die geräteseitige Koppelvorrichtung (300) zur Übertragung einer Information, insbesondere einer Dateninformation, an eine an dem Laserentfernungsmessgerät (100) angeordnete Aufsatzvorrichtung (200) oder von einer an dem Laserentfernungsmessgerät (100) angeordneten Aufsatzvorrichtung (200) eingerichtet ist.

3. Handgehaltenes Laserentfernungsmessgerät (100) nach einem der Ansprüche 1-2, **gekennzeichnet durch** eine Steuervorrichtung, die zu einem Empfang und/oder einer Auswertung zumindest einer von der am Laserentfernungsmessgerät (100) angeordneten Aufsatzvorrichtung (200) bereitgestellten Information vorgesehen ist.

4. Handgehaltenes Laserentfernungsmessgerät (100) nach Anspruch 3, **dadurch gekennzeichnet, dass** die Steuervorrichtung dazu eingerichtet ist, einen angeordneten Zustand einer Aufsatzvorrichtung (200) zu erfassen und/oder einen Typ einer angeordneten Aufsatzvorrichtung (200) zu erfassen, insbesondere eine mechanische und/oder elektrische Kennung einer Aufsatzvorrichtung (200) zu erfassen.

5. Handgehaltenes Laserentfernungsmessgerät (100) nach einem der Ansprüche 3-4, **dadurch gekennzeichnet, dass** die Steuervorrichtung dazu eingerichtet ist, in Abhängigkeit der Erfassung eines angeordneten Zustands der Aufsatzvorrichtung (200) und/oder in Abhängigkeit der Erfassung des Typs der angeordneten Aufsatzvorrichtung (200) ein elektrisches Signal an eine Ausgabevorrichtung (104) des Laserentfernungsmessgeräts (100) auszugeben und/oder eine Energieversorgung der geräteseitigen Koppelvorrichtung (300), insbesondere eine Energieversorgung der am Laserentfernungsmessgerät (100) angeordneten Aufsatzvorrichtung (200), zu steuern und/oder zu regeln.

6. Aufsatzvorrichtung (200) zur Anordnung an einem handgehaltenen Laserentfernungsmessgerät (100), insbesondere einem handgehaltenen Laserentfernungsmesseerät (100) nach einem der Ansprüche 1-5, mit einem Aufsatzgehäuse (202), wobei die Aufsatzvorrichtung (200) dem Aufsatzgehäuse (202) zugeordnet eine aufsatzseitige Koppelvorrichtung (400) aufweist, die zur reversiblen Anordnung der Aufsatzvorrichtung (200) zumindest an dem Laserentfernungsmessgerät (100) eingerichtet ist, wobei durch die Anordnung der Aufsatzvorrichtung (200) an dem Laserentfernungsmessgerät (100) zumindest eine Zusatzfunktionalität bereitstellbar ist, **dadurch gekennzeichnet, dass** die Aufsatzvorrichtung (200) zumindest eine elektrische Energienutzungseinheit aufweist, wobei die Energienutzungseinheit in an dem Laserentfernungsmessgerät (100) angeordneten Zustand von einer Energieversorgungsvorrichtung des Laserentfernungsmessgeräts (100) mit Energie versorgbar ist.

7. Aufsatzvorrichtung (200) nach Anspruch 6, **dadurch gekennzeichnet, dass** die Aufsatzvorrichtung (200) dazu eingerichtet ist, in an dem Laserentfernungsmessgerät (100) angeordnetem Zustand einen emittierten Laserstrahl (108) des Laserentfernungsmessgeräts (100) unter Verwendung eines optischen Elements, insbesondere unter Verwendung eines Spiegels, umzulenken, bevorzugt um einen Winkel von 90° umzulenken.

8. Aufsatzvorrichtung (200) nach einem der Ansprüche 6-7, **dadurch gekennzeichnet, dass** die Aufsatzvorrichtung (200) in an dem Laserentfernungsmessgerät (100) angeordnetem Zustand dazu eingerichtet ist, einen emittierten Laserstrahl (108) des Laserentfernungsmessgeräts (100) unter Verwendung eines optischen Elements, insbesondere unter Verwendung eines reflektierenden Kegelspiegels, derart umzulenken, dass eine auf einen entfernten Gegenstand projizierbare Laserlinie entsteht, insbesondere eine über einen Winkelbereich von 360° auf einen entfernten Gegenstand projizierbare Laserlinie entsteht.

9. Aufsatzvorrichtung (200) nach einem der Ansprüche 6-8, **dadurch gekennzeichnet, dass** die Aufsatzvorrichtung (200) in an dem Laserentfernungsmessgerät (100) angeordnetem Zustand dazu eingerichtet ist, einen emittierten Laserstrahl (108) des Laserentfernungsmessgeräts (100) unter Verwendung zumindest eines optischen Elements, insbesondere unter Verwendung zumindest einer Zylinderlinse, derart umzulenken, dass eine auf einen entfernten Gegenstand projizierbare Laserlinie entsteht.

10. Aufsatzvorrichtung (200) nach einem der Ansprüche 6-9, **dadurch gekennzeichnet, dass** die Aufsatzvorrichtung (200) in an dem Laserentfernungsmessgerät (100) angeordnetem Zustand dazu eingerichtet ist, einen emittierten Laserstrahl (108) des Laserentfernungsmessgeräts (100) unter Verwendung zumindest eines optischen Elements, insbesondere unter Verwendung zumindest zweier Zylinderlinsen, derart umzulenken, dass zwei auf einen entfernten Gegenstand projizierbare Laserlinien entstehen, die bevorzugt unter einem Winkel von 90° zueinander ausgerichtet sind, die besonders bevorzugt einander unter einem Winkel von 90° schneiden.

11. Aufsatzvorrichtung (200) nach einem der Ansprüche 6-10, **dadurch gekennzeichnet, dass** die Aufsatzvorrichtung (200) eine Lichtquelle, insbesondere eine LED, aufweist.

12. Aufsatzvorrichtung (200) nach einem der Ansprüche 6-11, **dadurch gekennzeichnet, dass** die Aufsatzvorrichtung (200) dazu eingerichtet ist, eine zusätzliche oder alternative Funktionalität aus einer Liste von Funktionalitäten bereitzustellen, die zumindest umfasst: Maßbandfunktionalität, Streckenmessfunktionalität, Temperaturmessfunktionalität, Feuchtigkeitsmessfunktionalität, Luftdruckmessfunktionalität, Luftfeuchtemessfunktionalität, Lufttemperaturmessfunktionalität, Kohlenstoffdioxidmessfunktionalität, Rauchdetektionsfunktionalität, Erschütterungsdetektionsfunktionalität, Bewegungsdetektionsfunktionalität, Profiltiefenmessfunktionalität, Nivellierfunktionalität.

13. Aufsatzvorrichtung (200) nach einem der Ansprüche 6-12, **dadurch gekennzeichnet, dass** die Aufsatzvorrichtung (200) eine Kommunikationsschnittstelle zur drahtlosen Kommunikation mit einem externen Datengerät aufweist, insbesondere zur Übermittlung von Informationen an ein externes Datengerät oder von einem externen Datengerät.

14. Aufsatzvorrichtung (200) nach einem der Ansprüche 6-13, **dadurch gekennzeichnet, dass** die aufsatzseitige Koppelvorrichtung (400) zur Übertragung einer Information, insbesondere einer Dateninformation, an eine Steuervorrichtung des Laserentfernungsmessgeräts (100) eingerichtet ist.

15. System (10) aus zumindest einem, insbesondere eigenständig nutzbaren, handgehaltenen Laserentfernungsmessgerät (100) nach einem der Ansprüche 1-5 und zumindest einer Aufsatzvorrichtung (200) nach einem der Ansprüche 6-14.

## Claims

1. Handheld laser distance measuring device (100) for the contactless distance measurement between the laser distance measuring device (100) and a remote object using a laser beam (108) which can be emitted by the laser distance measuring device (100), with a device housing (102) and an energy supply device, wherein the laser distance measuring device (100) has a device-side coupling device (300) paired with the device housing (102), said coupling device being set up to reversibly arrange at least one attachment device (200) on the laser distance measuring device (100), wherein at least one additional functionality can be provided due to the arrangement of the attachment device (200) on the laser distance measuring device (100), **characterized in that** the device-side coupling device (300) is set up to transmit electrical energy to an electrical energy utilization unit of an attachment device (200) arranged on the laser distance measuring device (100) .

2. Handheld laser distance measuring device (100) according to Claim 1, **characterized in that** the device-side coupling device (300) is set up to transmit information, in particular data information, to an attachment device (200) arranged on the laser distance measuring device (100) or from an attachment device (200) arranged on the laser distance measuring device (100).

3. Handheld laser distance measuring device (100) according to one of Claims 1-2, **characterized by** a control device which is provided for receiving and/or evaluating at least one piece of information provided by the attachment device (200) arranged on the laser distance measuring device (100).

4. Handheld laser distance measuring device (100) according to Claim 3, **characterized in that** the control device is set up to detect an arranged state of an attachment device (200) and/or to detect a type of an arranged attachment device (200), in particular a mechanical and/or electrical identifier of an attachment device (200).

5. Handheld laser distance measuring device (100) according to one of Claims 3-4, **characterized in that** the control device is set up to output an electrical signal to an output device (104) of the laser distance measuring device (100) depending on the detection of an arranged state of the attachment device (200) and/or depending on the detection of the type of the arranged attachment device (200), and/or to control and/or to regulate an energy supply of the device-side coupling device (300), in particular an energy supply of the attachment device (200) arranged on the laser distance measuring device (100).

6. Attachment device (200) for arranging on a handheld laser distance measuring device (100), in particular a handheld laser distance measuring device (100) according to one of Claims 1-5, having an attachment housing (202), wherein the attachment device (200) comprises an attachment-side coupling device (400) paired with the attachment housing (202), said coupling device being set up to reversibly arrange the attachment device (200) at least on the laser distance measuring device (100), wherein at least one additional functionality can be provided due to the arrangement of the attachment device (200) on the laser distance measuring device (100), **characterized in that** the attachment device (200) comprises at least one electrical energy utilization unit, wherein the energy utilization unit can be supplied with energy in a state arranged on the laser distance measuring device (100) by an energy supply device of the laser distance measuring device (100) .

7. Attachment device (200) according to Claim 6, **characterized in that** the attachment device (200) is set up to deflect an emitted laser beam (108) of the laser distance measuring device (100) in a state arranged on the laser distance measuring device (100) using an optical element, in particular using a mirror, preferably to deflect it at an angle of 90°.

8. Attachment device (200) according to one of Claims 6-7, **characterized in that** the attachment device (200) is set up in a state arranged on the laser distance measuring device (100) to deflect an emitted laser beam (108) of the laser distance measuring device (100) using an optical element, in particular using a reflecting conical mirror, in such a way that a laser line that can be projected onto a remote object results, in particular a laser line that can be projected onto a remote object across an angular range of 360°.

9. Attachment device (200) according to one of Claims 6-8, **characterized in that** the attachment device (200) is set up in a state arranged on the laser distance measuring device (100) to deflect an emitted laser beam (108) of the laser distance measuring device (100) using at least one optical element, in particular, using at least one cylinder lens, in such a way that a laser line that can be projected onto a remote object results.

10. Attachment device (200) according to one of Claims 6-9, **characterized in that** the attachment device (200) is set up in a state arranged on the laser distance measuring device (100) to deflect an emitted laser beam (108) of the laser distance measuring device (100) using at least one optical element, in particular using at least two cylinder lenses, in such a way that two laser lines that can be projected onto a remote object, that are preferably oriented with respect to one another at an angle of 90°, and that particularly preferably intersect one another at an angle of 90° result.

11. Attachment device (200) according to one of Claims 6-10, **characterized in that** the attachment device (200) comprises a light source, in particular an LED.

12. Attachment device (200) according to one of Claims 6-11, **characterized in that** the attachment device (200) is set up to provide an additional or alternative functionality from a list of functionalities which at least comprises: a measuring-tape functionality, a distance-measurement functionality, a temperature-measurement functionality, a moisture-measurement functionality, an air-pressure-measurement functionality, an air-humidity-measurement functionality, an air-temperature-measurement functionality, a carbon-dioxide-measurement functionality, a smoke-detection functionality, a vibration-detection functionality, a motion-detection functionality, a profile-depth-measurement functionality, a levelling functionality.

13. Attachment device (200) according to one of Claims 6-12, **characterized in that** the attachment device (200) comprises a communication interface for wireless communication with an external data device, in particular for the transmission of information to an external data device or from an external data device.

14. Attachment device (200) according to one of Claims 6-13, **characterized in that** the attachment-side coupling device (400) is set up to transmit information, in particular data information, to a control device of the laser distance measuring device (100).

15. System (10) consisting of at least one, in particular independently usable, handheld laser distance measuring device (100) according to one of Claims 1-5 and at least one attachment device (200) according to one of Claims 6-14.

## Revendications

1. Appareil de mesure de distance laser à main (100) destiné à la mesure de distance sans contact entre l'appareil de mesure de distance laser (100) et un objet distant à l'aide d'un faisceau laser (108) qui peut être émis par l'appareil de mesure de distance laser (100), ledit appareil comprenant un boîtier (102) et un dispositif d'alimentation en énergie, l'appareil de mesure de distance laser (100) comportant un dispositif d'accouplement côté appareil (300) qui est associé au boîtier (102) et qui est conçu pour agencer de manière réversible au moins un dispositif accessoire (200) sur l'appareil de mesure de distance laser (100), l'agencement du dispositif accessoire (200) sur l'appareil de mesure de distance laser (100) permettant de fournir au moins une fonctionnalité supplémentaire, **caractérisé en ce que** le dispositif d'accouplement côté appareil (300) est destiné à transmettre de l'énergie électrique à une unité d'utilisation d'énergie électrique d'un dispositif accessoire (200) agencé sur l'appareil de mesure de distance laser (100).

2. Appareil de mesure de distance laser à main (100) selon la revendication 1, **caractérisé en ce que** le dispositif d'accouplement côté appareil (300) pour transmettre des informations, notamment des informations de données, à un dispositif accessoire (200) agencé sur l'appareil de mesure de distance laser (100) ou depuis un dispositif accessoire (200) agencé sur l'appareil de mesure de distance laser (100), est agencé.

3. Appareil de mesure de distance laser à main (100) selon l'une des revendications 1 à 2, **caractérisé par** un dispositif de commande qui est prévu pour recevoir et/ou évaluer au moins une information fournie par le dispositif accessoire (200) agencé sur l'appareil de mesure de distance laser (100).

4. Appareil de mesure de distance laser à main (100) selon la revendication 3, **caractérisé en ce que** le dispositif de commande est conçu pour détecter un état agencé d'un dispositif accessoire (200) et/ou pour détecter un type de dispositif accessoire (200) qui a été agencé, notamment un identifiant mécanique et/ou électrique d'un dispositif accessoire (200).

5. Appareil de mesure de distance laser à main (100) selon l'une des revendications 3 à 4, **caractérisé en ce que** le dispositif de commande est conçu pour délivrer un signal électrique à un dispositif de sortie (104) de l'appareil de mesure de distance laser (100) en fonction de la détection d'un état agencé du dispositif accessoire (200) et/ou en fonction de la détection du type du dispositif accessoire (200) qui a été agencé et/ou pour commander et/ou réguler une alimentation en énergie du dispositif d'accouplement côté appareil (300), en particulier une alimentation en énergie du dispositif accessoire (200) agencé sur l'appareil de mesure de distance laser (100).

6. Dispositif accessoire (200) destiné à être agencé sur un appareil de mesure de distance laser à main (100), en particulier un appareil de mesure de distance laser à main (100) selon l'une des revendications 1 à 5, ledit dispositif accessoire comprenant un boîtier accessoire (202), le dispositif accessoire (200) comportant un dispositif d'accouplement côté accessoire (400) qui est associé au boîtier accessoire (202) et qui est conçu pour agencer de manière réversible le dispositif accessoire (200) au moins sur l'appareil de mesure de distance laser (100), l'agencement du dispositif accessoire (200) sur l'appareil de mesure de distance laser (100) permettant de fournir au moins une fonctionnalité supplémentaire, **caractérisé en ce que** le dispositif accessoire (200) comporte au moins une unité d'utilisation d'énergie électrique, l'unité d'utilisation d'énergie pouvant être alimentée en énergie par un dispositif d'alimentation en énergie de l'appareil de mesure de distance laser (100) dans l'état agencé sur l'appareil de mesure de distance laser (100).

7. Dispositif accessoire (200) selon la revendication 6, **caractérisé en ce que** le dispositif accessoire (200) est conçu pour dévier, dans l'état agencé sur l'appareil de mesure de distance laser (100), un faisceau laser émis (108) de l'appareil de mesure de distance laser (100) à l'aide d'un élément optique, notamment à l'aide d'un miroir, de préférence pour le dévier d'un angle de 90°.

8. Dispositif accessoire (200) selon l'une des revendications 6 à 7, **caractérisé en ce que**, à l'état agencé sur l'appareil de mesure de distance laser (100), le dispositif accessoire (200) est conçu pour dévier un faisceau laser émis (108) de l'appareil de mesure de distance laser (100) à l'aide d'un élément optique, notamment à l'aide d'un miroir conique réfléchissant, de façon à générer une ligne laser projetable sur un objet distant, en particulier une ligne laser projetable sur un objet distant sur une plage angulaire de 360°.

9. Dispositif accessoire (200) selon l'une des revendications 6 à 8, **caractérisé en ce que**, à l'état agencé sur l'appareil de mesure de distance laser (100), le dispositif accessoire (200) est conçu pour dévier un faisceau laser émis (108) de l'appareil de mesure de distance laser (100) à l'aide d'au moins un élément optique, en particulier à l'aide d'au moins une lentille cylindrique, de façon à générer une ligne laser projetable sur un objet distant.

10. Dispositif accessoire (200) selon l'une des revendications 6 à 9, **caractérisé en ce que**, à l'état agencé sur l'appareil de mesure de distance laser (100), le dispositif accessoire (200) est conçu pour dévier un faisceau laser émis (108) de l'appareil de mesure de distance laser (100) à l'aide d'au moins un élément optique, en particulier à l'aide d'au moins deux lentilles cylindriques, de façon à générer deux lignes laser projetables sur un objet distant qui sont de préférence orientées en formant un angle de 90° l'une par rapport à l'autre, qui se coupent de manière particulièrement préférée en formant un angle de 90°.

11. Dispositif accessoire (200) selon l'une des revendications 6 à 10, **caractérisé en ce que** le dispositif accessoire (200) comporte une source de lumière, notamment une LED.

12. Dispositif accessoire (200) selon l'une des revendications 6 à 11, **caractérisé en ce que** le dispositif accessoire (200) est conçu pour fournir une fonctionnalité supplémentaire ou alternative à partir d'une liste de fonctionnalités qui comprend au moins : une fonctionnalité de mètre ruban, une fonctionnalité de mesure de distance, une fonctionnalité de mesure de température, une fonctionnalité de mesure d'humidité, une fonctionnalité de mesure de pression atmosphérique, une fonctionnalité de mesure d'humidité de l'air, une fonctionnalité de mesure de température de l'air, une fonctionnalité de mesure de dioxyde de carbone, une fonctionnalité de détection de fumée, une fonctionnalité de détection de vibrations, une fonctionnalité de détection de mouvement, une fonctionnalité de mesure de profondeur de profil, une fonctionnalité de nivellement.

13. Dispositif accessoire (200) selon l'une des revendications 6 à 12, **caractérisé en ce que** le dispositif accessoire (200) comporte une interface de communication destinée à une communication sans fil avec un périphérique de données externe, notamment pour transmettre des informations à un périphérique de données externe ou depuis un périphérique de données externe.

14. Dispositif accessoire (200) selon l'une des revendications 6 à 13, **caractérisé en ce que** le dispositif d'accouplement côté accessoire (400) est conçu pour transmettre des informations, notamment des informations de données, à un dispositif de commande de l'appareil de mesure de distance laser (100).

15. Système (10) comprenant au moins un appareil de mesure de distance laser à main (100), notamment utilisable indépendamment, selon l'une des revendications 1 à 5 et au moins un dispositif accessoire (200) selon l'une des revendications 6 à 14.
